# DEMANDE DE BREVET EUROPEEN

(11) **EP 4 474 351 A1**
(43) Date de publication de la demande: **11.12.2024**
(21) Numéro de dépôt: 24164064.8
(22) Date de dépôt: 29.10.2018
(51) Int. Cl.: C01F 7/14, C01B 33/32

(54) **PROCEDE DE TRAITEMENT DE BAUXITE**

(30) Priorité: 31.10.2017 FR 1760259
(62) Demande divisionnaire de: 18803751.9
(71) Demandeur: IB2, 84800 L'Isle-sur-la-Sorgue (FR)
(72) Inventeur: OCCELLO, Yves, 84800 ISLE-SUR-LA-SORGUE (FR)
(74) Mandataire: IXAS Conseil

(57) **Abrégé**

Procédé de fabrication d'alumine à partir d'une bauxite prétraitée par un procédé comprenant une calcination (2020) et une lixiviation (2030), ladite bauxite prétraitée étant caractérisée en ce qu'elle présente une perte au feu inférieure à 2,5 % massiques, ledit procédé comprenant les étapes de :
(a) Traitement (2120) de la bauxite prétraitée avec une solution aqueuse de soude à une température d'au moins 100 °C, ladite solution aqueuse de soude présentant une concentration comprise entre 100 g Na₂O/L et 220 g Na₂O / L, de préférence entre 140 g Na₂O/L et 200 g Na₂O / L, plus préférentiellement entre 155 g Na₂O/L et 190 g Na₂O / L, et encore plus préférentiellement entre 160 g Na₂O/L et 180 g Na₂O / L ;
(b) Séparation (2130) du résidu solide de la phase liquide ;
(c) Cristallisation du trihydrate d'aluminium (2160) par ajout de germes (2170) ;
(d) Séparation (2180) du trihydrate d'aluminium cristallisé de la phase liquide,
(e) Calcination (2194) du trihydrate d'aluminium obtenu à l'étape (d) pour obtenir l'alumine (2196).

## Description

### Domaine technique de l'invention

L'invention concerne le domaine du traitement des minerais, et plus particulièrement les traitements physiques et chimiques de la bauxite. L'invention concerne en particulier un procédé de traitement thermique et de traitements chimiques de bauxite à faible rapport massique alumine / silice. Dans ce procédé on appauvrit d'abord le minerai en silicium par un prétraitement thermique suivi d'une lixiviation, puis on utilise ce minerai prétraité dans le procédé Bayer pour en extraire l'aluminium sous la forme de trihydrate d'aluminium, qui peut être transformé en alumine.

### Etat de la technique

L'aluminium est le troisième élément chimique le plus abondant de la croûte terrestre, après l'oxygène et le silicium. Associé à l'oxygène il se trouve dans un très grand nombre de roches. Le principal minerai industriel de l'aluminium est la bauxite, découverte en 1821 au village Les Baux (France) par le géologue Pierre Berthier. La bauxite représente un mélange complexe d'oxydes de l'aluminium, du fer et du silicium qui peut comprendre diverses impuretés telles que le titane, le calcium, le magnésium. Plus précisément, la bauxite est un minerai comprenant principalement trois minéraux d'aluminium, à savoir la gibbsite, la boehmite et le diaspore, mélangés avec des quantités plus faibles de minéraux de fer, à savoir la goethite et l'hématite (qui confère à la bauxite sa couleur caractéristique), ainsi que des aluminosilicates (kaolinite, illite, ...) et des minéraux de titane (anatase, rutile, ilmenite).

Le principal procédé industriel utilisé pour en extraire l'aluminium (sous forme d'oxyde) de la bauxite est le procédé Bayer, développé à la fin du 19^{ème} siècle. Il comprend essentiellement deux étapes : une première étape de lixiviation du minerai sous pression par une solution de soude (voir le brevet DE 43 977 du 3 août 1888), et une deuxième étape de précipitation de l'alumine hydratée pure à partir de la solution d'aluminate de sodium ainsi obtenue, par ensemencement avec des cristaux d'alumine hydratée (voir le brevet DE 65604 du 3 novembre 1892). Cette alumine de précipitation, hydratée, peut ensuite être soumise à des traitements thermiques pour la déshydrater ; ce traitement thermique détermine également la structure et morphologie de l'alumine obtenue, en vue de son utilisation (dans le procédé Hall-Héroult pour produire de l'aluminium par réduction électrochimique de l'alumine en sel fondu, ou comme alumine technique, notamment dans l'industrie des céramiques).

Plus précisément, le procédé Bayer consiste principalement en une attaque (digestion) sélective des hydrates d'alumine contenus dans la bauxite par une solution (appelée « liqueur ») de soude caustique chaude, qui est recyclée. Après séparation par décantation et lavage des résidus de bauxite (ces résidus étant appelées « boues rouges »), la solution de soude enrichie en aluminate de sodium est refroidie puis décomposée (phase de cristallisation) pour précipiter et extraire le trihydrate d'alumine (Al₂O₃-3H₂O) ; ce dernier est alors lavé puis calciné à haute température pour donner l'alumine (Al₂O₃). La liqueur appauvrie en aluminate de sodium après la phase de cristallisation et diluée par les entrées d'eau, provenant essentiellement de lavage des résidus de bauxite, est évaporée et recyclée à l'attaque.

La composition de la bauxite dépend de son origine géographique. Cette variation de composition concerne à la fois sa teneur en éléments principaux (AI, O, Si), sa teneur en impuretés, et sa structure minéralogique. Par exemple, les bauxites latériques (sur substrat géologique alumino-silicaté) provenant de mines situées en Guinée ou d'Australie présentent en règle générale une teneur forte en gibbsite, qui est un trihydrate), et une teneur en silicium moins élevée, que les bauxites de karst (sur substrat géologique carbonaté) provenant de certaines mines situées en Iran, au Kazakhstan, en Azerbaïdjan et en Turquie, dans lesquelles l'aluminium se présente principalement sous la forme de boehmite et diaspore (deux modifications de monohydrates). Ainsi, un paramètre simple pour représenter la qualité d'une bauxite est le rapport alumine sur silice, abrégé « rapport AIS ». A titre d'exemple, les bauxites de Guinée présentent généralement des rapports Al₂O₃/SiO₂ de l'ordre de 20 ou plus, et les bauxites de l'Australie occidentale des rapports supérieurs à 15. Dans les bauxites du Nord Queensland l'aluminium est présent principalement sous forme de boehmite et de gibbsite.

La teneur en aluminium n'est cependant pas le seul critère : encore faut-il que cet aluminium se présente sous une forme chimique et cristallographique susceptible d'être extrait de la bauxite par le procédé Bayer. On sait que le procédé Bayer traditionnel ne permet pas de solubiliser l'aluminium contenu dans les aluminosilicates : cette partie de l'aluminium est perdue dans les boues rouges. Par ailleurs, on sait que les aluminosilicates contenus dans les boues rouges peuvent emporter une partie de la soude et ainsi augmenter la consommation globale de soude du procédé Bayer ; cela est décrit dans la publication « Basic Research on Calcification Transfomation, Process of Low Grade Bauxite » de Xiaofeng Zhu et al., parue dans Light Metals 2013, p. 239-244 (TMS).

Comme la plupart des minerais, la bauxite est négociée sur un marché mondial et transportée souvent sur des milliers de kilomètres jusqu'au lieu de son utilisation. Cependant, certains pays préfèrent limiter leur approvisionnement sur le marché mondial au profit de l'utilisation de leurs ressources minières domestiques, même si ces dernières sont de qualité moins bonne. Tel est notamment le cas de la Chine. La Chine, le plus grand producteur d'aluminium du monde, dispose de gisements et mines de bauxite qui ne présentent pas (ou plus) un rapport A/S aussi élevé que les bauxites australiennes par exemple. Plus précisément, en Chine, les gisements d'alumine à faible teneur en silicium (A/S > 8 ou même > 6) deviennent rares, alors que la bauxite à forte teneur de silicium existe dans des quantités considérables. De plus, dans plusieurs bauxites chinoises à forte teneur de silice le silicium est présent en grande partie sous la forme de kaolinite, un aluminosilicate qui renferme également une partie de l'aluminium présent dans la bauxite ; elles comportent également une petite fraction de quartz (un silicate) et de la muscovite (un autre aluminosilicate). Or, comme indiqué ci-dessus, le procédé Bayer traditionnel ne permet pas d'extraire l'aluminium présent dans des aluminosilicates.

Depuis des décennies la production d'aluminium primaire (et par conséquent la consommation de bauxite) augmente régulièrement de quelques pourcents par an. Ces dernières années l'utilisation de bauxites de moindre qualité devient un enjeu économique et technologique majeur, surtout en Iran, au Kazakhstan et en Chine. Cette question se pose également dans d'autres pays, tels que la Russie et la Turquie, et ce sont surtout des chercheurs de ces pays qui ont cherché des possibilités pour valoriser des bauxites présentant un faible rapport A/S. Certaines de ces bauxites présentent en outre une teneur en fer et/ou en soufre plus élevée que les bauxites riches en aluminium.

Il existe différents approches pour prétraiter la bauxite en vue de modifier sa structure minéralogique de manière à augmenter le taux d'aluminium extractible par le procédé Bayer, ou de manière à faciliter la séparation du silicium en amont du procédé Bayer. Il existe également des procédés visant à faciliter la séparation du fer en amont du procédé Bayer, en vue de réduire la formation de boues rouges et de récupérer cet élément sous une forme utilisable.

A titre d'exemple, l'article *«* Pre-beneficiation of low grade Diasporic bauxite ore by réduction roasting » de K. Yilmaz et al., paru en 2015 dans la revue Int. J. Chemical, Molecular, Nuclear, Materials and Metallurgical Engineering, vol 9(9), p. 1023-1026, décrit une méthode de calcination (appelé en anglais « roasting ») de bauxite d'origine turque à forte teneur en Si et Fe pour transformer le fer en phases susceptibles d'être séparés par un procédé magnétique. D'autres procédés de calcination en milieu réducteur utilisent du CO (CN 103 614 547 - Central South University; CN 104 163 445 - China Aluminium) ou du charbon CN 101 875 129 - Central South University).

Pour les bauxites à faible rapport A/S une méthode appelé « calcification - carbonation » a été décrite (voir par exemple *«* Calcification - carbonation method for alumina production by using low-grade bauxite » de Ting'an Zhang et al., K. Yilmaz et al., Light Metals 2013, p. 233-238 (TMS)). Ce procède comprend le traitement de la bauxite par une liqueur alkaline en présence de chaux (conduisant à la formation d'une phase calcium-aluminium-silicate insoluble), et le traitement de cette phase insoluble (après décantation) par du CO₂ sous pression pour libérer une partie de l'aluminium en formant deux nouvelles phases insolubles, le Ca₃SiO₄ et le CaCO₃.

Un certain nombre d'autres procédés ont été décrits, par exemple la calcination d'un mélange solide de bauxite + Na₂CO₃ à 600 - 1 000 °C puis la dissolution du mélange calciné dans NaOH à 75°C, suivie d'un ensemencement pour précipiter une phase qui emporte le silicium (CN 102 180 498 et CN 101 767 807, Aifang Pan) ; dans une variante de ce procédé décrite dans CN 205 603 238 (Hangzhou Jinjiang) le mélange soumis à la calcination comporte également de la chaux ; et le Na₂CO₃ forme avec l'eau une base qui permet la lixiviation de la silice. On connaît également des procédés dans lesquels la bauxite est calcinée sans ajout de produits. CN 203 408 047 décrit un tel procédé (Xi'An University) pour désulfuriser des bauxites qui contiennent de la pyrite (FeS₂).

L'idée d'un procédé d'activation thermochimique de la bauxite (appelé en anglais « roast-leach process ») a été décrite par Smith et Xu-Parker (« Options for processing of high silica bauxites », travaux ICSOBA Vol. 35(39), 184-192 (2010)). Ce procédé a été développé initialement pour des matières premières de type argile (voir US 2,939,764) et illite (voir T Jiang et al., « Desilication from illite by thermochemical activation », Trans. Nonferrous Met. Soc. China, Vol 14(5), p. 1000-1005 (2004)), ainsi que pour des minerais d'aluminium à base de diaspore et ne comprenant pas de silicium (Q Zhou et al., « Température dependence of crystal structure and digestibility of roasted diaspore », Trans. Nonferrous Met. Soc. China, Vol 14(1), p. 180-183 (2004)). Il comprend en fait deux étapes distinctes, une première étape de calcination de la bauxite à une température de 980 °C, sans additif, au cours de laquelle le kaolin se décompose en partie pour former de la silice amorphe et des alumines dites de transition, et une seconde étape de lixiviation qui vise à dissoudre de manière sélective la silice amorphe dans des conditions plus douces que celles du procédé Bayer. Le résidu (la bauxite calcinée et lixiviée) est ensuite introduit dans le procédé Bayer traditionnel. Ce procédé présente de prime abord l'inconvénient de nécessiter de l'énergie thermique supplémentaire pour la calcination de la bauxite, pour arriver à une bauxite calcinée et lixiviée qui présente des caractéristiques comparables à celle d'une bauxite de bonne qualité. Cette surconsommation énergétique peut présenter un frein au développement du procédé. Par ailleurs, le procédé nécessite une matière première supplémentaire, à savoir la chaux, pour précipiter le silicate issu de la solubilisation de la silice amorphe formée au cours de la calcination de la bauxite.

Le procédé Roast-Leach a donné lieu à une littérature scientifique assez vaste, qui s'est focalisée sur l'étape de calcination, avec des indications divergentes quant à la température optimale de calcination. La valeur maximale de la température de calcination semble être donnée par la formation de mullite : Selon Xu et al. (« Thermal behaviors of kaolinite-diasporic bauxite and desilication from it by roasting-alkali leaching process », Light Metals TMS 2002), la décomposition de méta-kaolinite en silice amorphe et alumine gamma débute à 990 °C, mais aux environs de 1 100 °C ces deux phases commencent à réagir pour former de la mullite, insoluble dans la soude dans les conditions du procédé Bayer traditionnel ; une température entre 1000 °C et 1050 °C est recommandée. Li et al. («Desilication of bauxite ores bearing multi-aluminosilicates by thermochemcial activation process », Light Metals TMS 2009, p. 57 - 61) observent également de la mullite à partir de 1 100 °C et constatent une baisse de la désilication à 1150 - 1200 °C, mais concluent que l'activation de la bauxite est optimale entre 1100 °C et 1150 °C. Une publication de N. Eremin de 1981 (« Beneficiation of low-grade bauxites by hydrometallurgical methods », ICSOBA 1981, p. 135 - 142) indique un mécanisme similaire avec une température optimale entre 925 °C et 1000 °C. La publication de Moazemi et Rezai (« Desilication studies of diasporic bauxite bythermochemical treatment », Proc. XI Int. Seminar on Minerals Processing Technology (MPT-2010), p. 832-838) montre que la courbe du rendement d'extraction par lixiviation en fonction de la température de calcination présente un maximum assez étroit à 1 000 °C.

Malgré ces progrès dans la compréhension du procédé Roast-Leach, on constate qu'il n'est guère utilisé de manière industrielle car il ajoute un surcoût d'exploitation significatif au procédé Bayer traditionnel. De plus, ce surcoût est lié à deux postes particulièrement visés dans l'établissement d'un écobilan, à savoir la consommation énergétique et la consommation d'eau.

Le problème que la présente invention cherche à résoudre est de développer une méthode ou un procédé amélioré et économiquement viable pour utiliser des bauxites à faible teneur en alumine (A/S < 5 et préférentiellement < 4 et encore plus préférentiellement < 3) dans un procédé de type procédé Bayer.

### Objets de l'invention

Selon l'invention le problème est résolu par un procédé de traitement de la bauxite qui comprend un prétraitement de la bauxite, qui améliore son aptitude à être utilisée comme matière première dans le procédé Bayer, connu en tant que tel, et en adaptant le procédé Bayer à cette bauxite prétraitée.

Ledit prétraitement de la bauxite comprend une première étape de prétraitement, qui est un prétraitement physique, à savoir thermique. Ce prétraitement thermique est destiné à provoquer une modification chimique et cristallographique de la bauxite (ou au moins de certains de ces phases minéralogiques qui la constituent). Cette première étape de prétraitement de la bauxite est avantageusement effectuée sur une bauxite broyée. Elle conduit à une bauxite modifiée qui peut ensuite être introduite dans le procédé Bayer, ou être soumis à une deuxième étape de prétraitement, chimique.

Plus particulièrement, ledit prétraitement thermique est effectué à une température et pendant une durée telle qu'au moins une partie des silicates présents dans la bauxite est transformée en silice amorphe. Pour une bauxite diasporique cette température se situe avantageusement entre 1000°C et 1050 °C, de préférence entre 1015°C et 1030°C, et encore plus préférentiellement entre 1015 °C et 1025 °C. Pour des bauxites boehmitiques cette température est inférieure de 40°C environ et se situe entre environ 960 °C et environ 1000 °C et de préférence entre 970 °C et 990 °C.

Ce procédé peut être mis en oeuvre en partie sur le site industriel de production de la bauxite ou entièrement sur le site industriel où est installé le procédé Bayer. Il nécessite un équipement dédie, à savoir un four. Ce procédé est avantageusement mis en oeuvre sur de la bauxite broyée.

Selon l'invention, le procédé de traitement de la bauxite comprend une deuxième étape de prétraitement, qui est une étape chimique. Elle comprend la lixiviation par la soude de la bauxite modifiée. Au cours de cette étape, et dans les conditions appropriées de température, de temps de séjour, de concentration en soude et de ratio solide/liquide, la silice amorphe obtenue lors de la calcination est dissoute alors que l'alumine passe très peu en solution.

Cette étape de lixiviation doit être effectuée sur une bauxite broyée, et pour cette raison il est avantageux que le broyage se fasse en amont de l'étape de prétraitement thermique. Le procédé de broyage et la taille de grain visée peuvent être similaires à ceux utilisés pour le procédé Bayer traditionnel. Il est également possible de rebroyer la bauxite traitée avant son introduction dans le procédé Bayer.

Le procédé de prétraitement de la bauxite naturelle par un procédé comprenant successivement une calcination et une lixiviation conduit à un produit appelé ici « bauxite prétraité » qui se distingue, à la fois sur le plan chimique et minéralogique, d'une bauxite naturelle. Un paramètre simple qui exprime cette particularité de la bauxite prétraitée est sa perte au feu ; cette perte au feu est très inférieure (typiquement d'un facteur dix à vingt) à celle d'une bauxite naturelle (non prétraitée).

Ainsi, un premier objet de l'invention est un procédé de fabrication de trihydrate d'alumine ou d'alumine à partir d'une bauxite prétraitée par un procédé comprenant une calcination et une lixiviation, ladite bauxite prétraitée étant caractérisée en ce qu'elle présente une perte au feu inférieure à 2,5 % massiques, de préférence inférieure à 2,0 %, et encore plus préférentiellement inférieure à 1,5 %. Avantageusement, cette bauxite prétraitée est également caractérisée par l'absence de diaspore et la présence de silice amorphe.

Ledit procédé comprend les étapes de :
(a)Traitement (« digestion ») de la bauxite prétraitée avec une solution aqueuse de soude à une température d'au moins 100°C (typiquement dans un autoclave), ladite solution aqueuse de soude présentant une concentration comprise entre 100 g Na₂O/L et 220 g Na₂O / L, de préférence entre 140 g Na₂O/L et 200 g Na₂O / L, plus préférentiellement entre 155 g Na₂O/L et 190 g Na₂O / L, et encore plus préférentiellement entre 160 g Na₂O/L et 180 g Na₂O / L ;
(b)Séparation du résidu solide de la phase liquide ;
(c) Cristallisation du trihydrate d'aluminium par ajout de germes ;
(d)Séparation du trihydrate d'aluminium cristallisé de la phase liquide ;
(e)Calcination du trihydrate d'aluminium obtenu à l'étape (d) pour obtenir l'alumine (2196).

Cette dernière étape est optionnelle : si le procédé selon l'invention vise l'obtention de trihydrate d'aluminium, qui est un produit commercial, on se contentera de sécher le trihydrate d'aluminium obtenu à l'étape (d). Si le procédé vise l'alumine, l'étape (e) est nécessaire.

Avantageusement, la température à l'étape (a) est comprise entre 150 °C et 350 °C, de préférence entre 200 °C et 300 °C, plus préférentiellement entre 220 °C et 280 °C, et encore plus préférentiellement entre 250 °C et 270 °C.

Ladite bauxite prétraitée présente avantageusement présent un rapport massique de Al₂O₃ / SiO₂ supérieur à 8, et de préférence supérieur à 9, et encore plus préférentiellement supérieur à 10. Sa teneur massique en alumine est avantageusement supérieure à 60 %, préférentiellement supérieure à 65 %, et encore plus préférentiellement supérieure à 70 %. Sa teneur massique en silice est inférieure à 12 %, préférentiellement inférieure à 10 %, et encore plus préférentiellement inférieure à 8 %.

Dans un mode de réalisation avantageux du procédé selon l'invention, on réintroduit la phase liquide issue de l'étape (d) dans la solution aqueuse de soude utilisée à l'étape (a).

Avantageusement, ladite bauxite prétraitée a été prétraitée par calcination à une température comprise entre environ 920 °C et environ 1 200 °C. Cette température est de préférence entre environ 950 °C et environ 1 070 °C, et encore pus préférentiellement entre environ 1 000 °C et environ 1 050 °C, notamment dans le cas de bauxites diasporiques ; pour des bauxites boehmitiques on préfère une température de calcination plus faible, comprise entre environ 950 °C et environ 1 100 °C, plus particulièrement entre environ 960 °C et environ 1 000 °C, et plus préférentiellement entre environ 970 °C et environ 990 °C.

Cette calcination conduit à une transformation chimique et cristallographique de la bauxite. Plus particulièrement, une fraction largement majoritaire (et souvent la totalité) du diaspore (qui est la forme sous laquelle se trouve la grande majorité (et souvent la quasi-totalité) de l'alumine dans les bauxites de faible rapport AIS) est transformée en alumine alpha. Cette transformation s'accompagne du départ de certaines matières volatiles présentes dans la bauxite ou formés lors de ladite transformation chimique et cristallographique. La perte au feu est un paramètre facilement déterminable qui exprime de manière synthétique l'état de cette transformation chimique et cristallographique lors de la calcination.

La bauxite calcinée présente une meilleure solubilité de l'aluminium contenue notamment dans les aluminosilicates dans les conditions habituelles de l'étape dite de digestion de la bauxite du procédé Bayer, et une meilleure solubilité du silicium dans des conditions plus douces que celles de l'étape de digestion du procédé Bayer. Ainsi, le traitement de la bauxite calcinée par lixiviation avec une solution aqueuse de soude dans des conditions réactionnelles plus douces que celles de l'étape de digestion du procédé Bayer permet de solubiliser la silice.

A cause de la transformation chimique et cristallographique qui se produit lors de la calcination, la bauxite prétraitée présente un taux massique de diaspore qui est beaucoup plus faible que dans la bauxite ; après calcination ce taux est préférentiellement inférieur à 5 %, plus préférentiellement inférieur à 3 %, encore plus préférentiellement inférieur à 2 %, et de manière optimale inférieur à 1 %. Pour la même raison, le taux massique de kaolinite dans la bauxite prétraitée est préférentiellement inférieur à 4 %, plus préférentiellement inférieur à 3 %, encore plus préférentiellement inférieur à 2 %, et de manière optimale inférieur à 1 %. Ces taux massiques de diaspore et de kaolinite peuvent être déterminés par les méthodes usuelles de cristallographie aux rayons X, mises en oeuvre sur des échantillons de poudre de bauxite prétraitée.

A titre d'exemple, une bauxite prétraitée préférée pour utilisation dans le procédé selon l'invention présente une perte au feu inférieure à 2 %, un taux de diaspore inférieur à 3 % et un taux de kaolinite inférieur à 3 %, ces pourcentages étant des pourcentages massiques. De manière plus préférée, cette bauxite prétraitée présente une perte au feu inférieure à 2 %, un taux de diaspore inférieur à 2 % et un taux de kaolinite inférieur à 2 %, et manière encore plus préférée une perte au feu inférieure à 1,5 %, un taux de diaspore inférieur à 1 % et un taux de kaolinite inférieur à 2 %.

Un autre objet de l'invention est un procédé de fabrication de trihydrate d'alumine ou d'alumine à partir d'une bauxite comprenant les étapes suivantes :
(i) Un prétraitement d'une bauxite pour obtenir ladite bauxite prétraitée, ledit prétraitement comprenant successivement :
   o une calcination,
   o une lixiviation avec une solution aqueuse de soude,
   o la séparation du solide de la phase aqueuse de lixiviation, ledit solide séparé représentant ladite bauxite prétraitée,
(ii) Un traitement de ladite bauxite prétraitée par le procédé selon le premier objet de l'invention.

Ladite bauxite, susceptible, après prétraitement par calcination et lixiviation à la soude, d'entrer dans le procédé selon l'invention, présente avantageusement un rapport de Al₂O₃ / SiO₂ compris entre 1 et 8, de préférence compris entre 1 et 7, encore plus préférentiellement entre 1 et 5,5 , encore plus préférentiellement compris entre 1 et 4, et même entre 1 et 3 ou entre 2 et 3. Le prétraitement de la bauxite selon l'invention conduit à une augmentation significative du rapport Al₂O₃ / SiO₂, typiquement d'un facteur deux à trois. Si le rapport Al₂O₃ / SiO₂ de la bauxite qui entre dans le procédé selon l'invention est supérieur à 8, le procédé peut ne pas être économiquement viable, car le fait d'utiliser une bauxite prétraitée plutôt qu'une bauxite naturelle ne conduit pas à un rendement supplémentaire en alumine suffisamment intéressant, et le potentiel de réduction de la consommation de soude est limité.

Un autre objet de l'invention est une alumine susceptible d'être obtenue par le procédé selon l'invention.

Encore un autre objet de l'invention est une installation pour la mise en oeuvre du procédé selon l'invention, comprenant :
- une unité de prétraitement de la bauxite par calcination et lixiviation, permettant de transformer une bauxite en bauxite prétraitée ; et
- une unité de fabrication d'alumine à partir de ladite bauxite prétraitée pour la mise en oeuvre du procédé selon l'invention,
caractérisée en ce que :
- ladite unité de prétraitement comprend
   o au moins un four de calcination pour calciner la bauxite,
   o au moins une unité de lixiviation pour lixivier la bauxite calcinée avec une solution aqueuse de soude (dite « solution de lixiviation »), et
   o au moins une unité de séparation solide - liquide pour séparer la bauxite calcinée et lixiviée de ladite solution de lixiviation ;
- ladite unité de fabrication d'alumine à partir de ladite bauxite prétraitée comprend
   o au moins une enceinte (tel qu'un autoclave ou un dispositif tubulaire) pour traiter la bauxite prétraitée avec une solution aqueuse de soude (dite « liqueur Bayer ») à une température d'au moins 100°C,
   o au moins une unité de séparation solide - liquide pour séparer le résidu solide (appelé « boue rouge ») de ladite liqueur Bayer ;
   o au moins une unité de cristallisation pour cristalliser du trihydrate d'aluminium à partir de ladite liqueur Bayer par ajout de germes de trihydrate d'aluminium ;
   ∘ au moins une unité de séparation solide - liquide pour séparer le trihydrate d'aluminium cristallisé de ladite liqueur Bayer ;
   ∘ optionnellement au moins une unité de calcination pour transformer ledit trihydrate d'aluminium en alumine.

Dans cette installation ladite liqueur Bayer issue de ladite unité de séparation solide - liquide utilisée pour séparer le trihydrate d'aluminium cristallisé de la phase liquide est recirculée vers l'étape de digestion.

### Figures

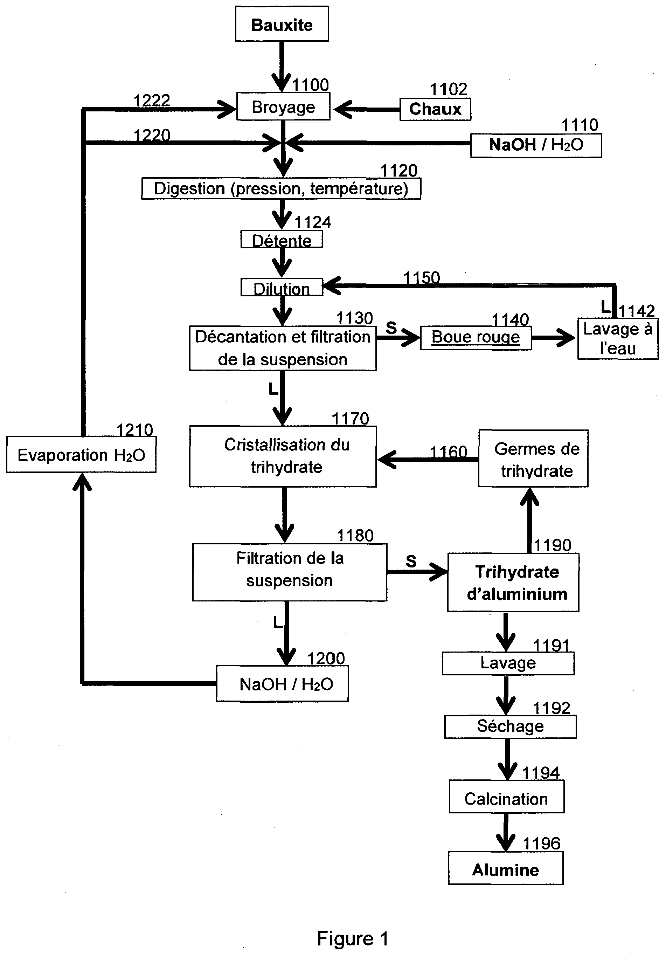

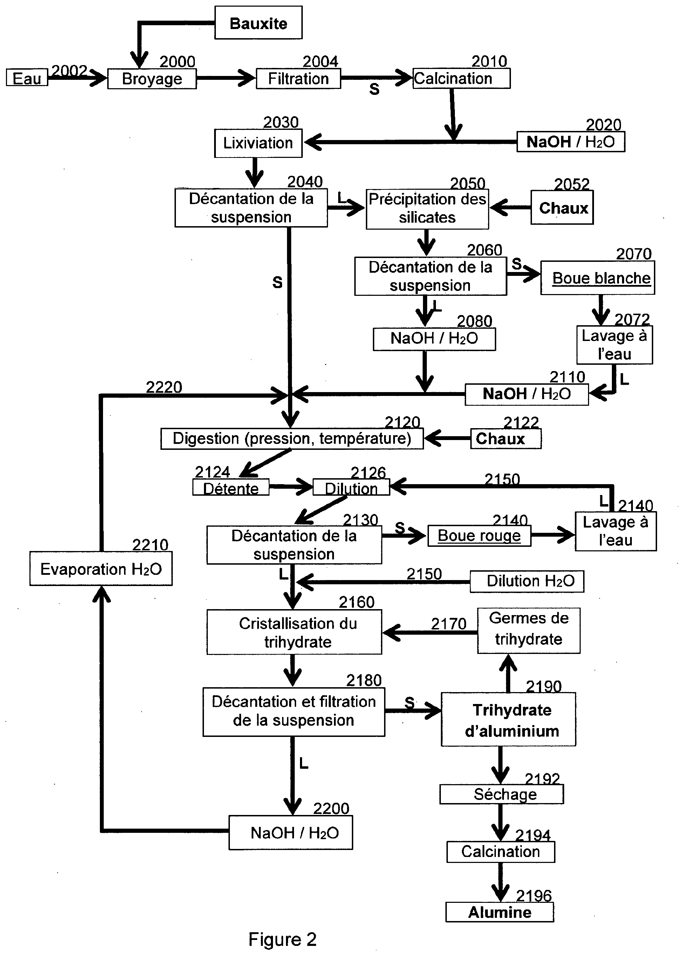

Dans les figures 1 et 2, les repères à trois chiffres désignent des objets matériels (dispositifs, composants ou produits), alors que les repères à quatre chiffres désignent des étapes de procédé. A la suite d'une étape de séparation de phase la lettre « L » désigne la phase liquide, la lettre « S » la phase solide.
La figure 1 montre un schéma simplifié du procédé Bayer selon l'état de la technique.
La figure 2 montre un schéma simplifié d'un mode de réalisation du procédé selon l'invention.
Les figures 3 et 4 se réfèrent à l'exemple 3 et montrent des courbes d'analyse thermogravimétrique et thermodifférentielle (ATG - ATD) d'échantillons de bauxite, la montée en température correspond à la calcination pour obtenir une bauxite calcinée. La courbe qui se réfère à l'échelle de gauche, identique sur les deux figures, représente la perte de masse. La courbe qui se réfère à l'échelle de droite représente la perte de masse (PM) par minute (figure 3) et le flux de chaleur (figure 4).
La figure 5 montre la perte au feu (mesuré après calcination à 1060 °C) d'une bauxite diasporique à haute teneur en silice qui a été calcinée à des températures différentes.

### Description

### 1. Le procédé Baver classique

L'invention sera expliquée en détail par rapport au procédé Bayer selon l'état de la technique qui est représenté sur la figure 1. La bauxite en provenance d'un mine de bauxite est broyée (étape **1100**) en présence d'une phase liquide, qui est de l'aluminate de soude, comme cela sera expliqué en plus grand détail ci-dessous. Le broyage vise à augmenter la surface spécifique de la bauxite accessible à l'action de la phase liquide lors de l'attaque en vue de la digestion de la bauxite. On vise typiquement une taille de grains de quelques centaines de µm. Le broyage se fait avec l'ajout de chaux (étape **1102**), sous forme de lait ou sous forme solide. La chaux exerce une triple action : (i) Lors de la digestion de la bauxite la chaux diminue la consommation de soude car elle favorise la précipitation des silicates soluble sous la forme de silico-aluminates de calcium plutôt que sous la forme de silico-aluminates de sodium (qui emporteraient autrement une partie du sodium de la soude, plus chère que la chaux) ; (ii) la chaux promeut la dissolution de l'aluminium et améliore le rendement d'extraction de l'alumine au cours de la digestion ; et (iii) la chaux améliore la décantation des boues après attaque, car elle favorise la transformation de la goethite, difficilement décantable et filtrable, en hématite, mieux cristallisée.

La bauxite broyée est ensuite attaquée par une solution aqueuse de soude (étape **1110**) sous pression et à haute température dans des autoclaves ou des échangeurs tubulaires. Cette attaque (appelée « digestion ») conduit à la digestion partielle de la bauxite (étape **1120**), plus précisément, c'est la partie soluble des minéraux d'aluminium (l'alumine notamment, qu'elle soit présente sous la forme de monohydrate ou de trihydrate) qui forme des ions d'aluminate. Dans de nombreux cas la digestion se fait à une température comprise entre 250 °C et 270 °C en autoclaves fermés ou en échangeurs tubulaires. Ladite solution aqueuse de soude est en pratique une solution aqueuse d'aluminate de soude. On utilise typiquement une concentration en soude comprise entre 235 g Na₂O IL et 245 g Na₂O IL. L'homme du métier sait adapter de manière fine les paramètres de cette étape, notamment la température, le temps de séjour et la concentration de la soude, à la composition de la bauxite ; la même remarque s'applique à la quantité de chaux ajoutée à l'étape **1102.** A titre d'exemple, on sait que les bauxites à forte teneur d'alumines monohydrates (boehmite, et surtout diaspore) ont besoin de températures de digestion plus élevées que les bauxites à forte teneur de trihydrate (gibbsite).

La plage de température entre 250 °C et 270 °C permet d'assurer que toute l'alumine soluble contenue dans la bauxite (y compris la fraction de diaspore, qui est la plus difficilement soluble parmi les oxydes d'aluminium, et dont la teneur peut être très variable) est digérée. En particulier, les bauxites de karst, qui sont le principal champ d'application de la présente invention, nécessitent cette plage de température. Certaines usines utilisant des bauxites de karst sont même conçues pour travailler à une température jusqu'à 280 °C, afin de pouvoir s'adapter en cas de besoin à l'utilisation de bauxites de composition très spécifique.

Lors de cette étape de digestion **1120,** la bauxite peut être mise en contact avec la liqueur préchauffée (procédé dit à double flux), ou la suspension de bauxite dans la liqueur Bayer est constituée avant d'être chauffée (procédé dit à flux simple). Dans certaines usines l'étape de digestion **1120** est effectuée en deux étapes, chacune étant opérée à une température différente, afin de dissoudre d'abord les fractions facilement solubles, puis, à une température plus élevée, le résidu solide de la première étape. Cette variante à double digestion peut économiser de l'énergie, mais elle suppose un investissement plus important et complique le procédé.

Lorsque la suspension est détendue (étape **1124**), par étapes de détente successives, une partie de l'eau s'évapore (auto-évaporation).

Lors de la décantation à pression ambiante (étape **1130**) le résidu (appelé « boue rouge ») est séparé de la phase liquide (liqueur) ; on ajoute des agents floculants qui augmentent la vitesse de séparation de phase et améliorent la clarification des liqueurs (i.e. la quantité résiduelle de matière sèche dans les liquide). Le résidu solide est appelé « boue rouge » ; il contient toutes les phases cristallines provenant de la bauxite non réactive a la digestion (**1120**) et celles formées durant le cycle Bayer. On récupère le résidu (appelé « boue rouge ») (étape **1140**) et le lave à l'eau (étape **1142**) afin de récupérer un maximum de la liqueur ; ce lavage se fait en règle générale à l'eau brute et à contre-courant (afin de minimiser la quantité d'eau utilisée) ; il est suivi d'une étape de décantation et/ou filtration (non représentée sur la figure). Les boues rouges sont un résidu poudreux dont la valorisation n'est pas aisée, et qui finit encore fréquemment dans des stockages spécifiques.

La phase liquide (« L ») issue de l'étape **1130** de séparation de phases est une solution d'aluminate de sodium. Après dilution (étape **1150**) le trihydrate d'aluminium est cristallisé (étape **1170**) par refroidissement de l'aluminate et ajout de germes (appelés aussi « amorces ») de trihydrate d'aluminium (étape **1160**). Cette étape de cristallisation est appelée dans la profession la « décomposition » ; sa durée est de l'ordre de 40 heures. La dilution à l'eau froide (étape **1150**) réutilise les eaux de lavage des boues rouges.

Cette étape **1170** fait appel à un certain savoir-faire, connu de l'homme du métier, afin d'adapter les nombreux paramètres du procédé (saturation de la liqueur à l'entrée de la décomposition, concentration en Na₂O et en impuretés de différentes natures, températures de tête et de fin de décomposition, surface d'amorce, technologie de cristallisation, classement granulométrique) au mieux à la nature du produit alumine souhaité ; les phénomènes physico-chimiques qui interviennent relèvent surtout de la nucléation (formation spontanée de particules fines au sein d'une suspension), l'agglomération des particules fines, le classement granulométrique par cyclonage et/ou décantation.

Le trihydrate précipité est séparé par décantation et filtration (étape **1180**) en utilisant différentes technologies connues; il est récupéré (étape **1190**). Une partie significative du trihydrate doit être recyclé dans l'étape de décomposition **1160,** le reste est séché (étape **1192**) et calciné (étape **1194**) en alumine. Cette dernière est stockée (étape **1196**) en vue de son acheminement vers un site consommateur. L'étape de séchage (étape **1192**) est typiquement effectuée comme première étape de la calcination (étape **1194**) qui se déroule en plusieurs étages. Lors de cette montée en température on élimine d'abord l'eau d'imprégnation, à partir d'environ 100 °C, puis l'eau de constitution du trihydrate (aux environs de 1 000 °C) ; la montée en température est ensuite poursuivie pour obtenir la structure cristalline souhaitée. Deux technologies sont utilisées majoritairement : la calcination en four à lit fluidisé circulant (en anglais « Circulating Fluid Bed », abrégé CFB), et la calcination en suspension dans des gaz chauds (en anglais « Gaz suspension calcination », abrégé GSC). D'anciennes usines disposent encore de fours rotatifs qui conviennent également pour la mise en oeuvre de cette étape.

La phase liquide issue de l'étape de séparation de phase **1180** est une solution aqueuse de soude, plus diluée que celle utilisée à l'étape **1110** à cause des diverses entrées d'eau dans le flux (eau de lavage des boues rouges (étape **1142**) et du trihydrate, eau de dilution (étape **1150**)). Pour cette raison elle doit être concentrée par évaporation d'eau (étape **1210**) pour être recyclée (étape **1220**) dans la solution de soude utilisée pour l'étape de digestion (étape **1120**). Elle est également réutilisée (étape **1222**) dans l'étape de broyage humide de la bauxite (étape **1100**).

Le trihydrate obtenu à l'étape **1190** peut être lavé avant séchage ; cette eau de lavage peut être réutilisée dans le lavage des boues rouges à l'étape **1142** (non montré sur la figure).

Dans le procédé Bayer selon l'état de la technique, de la soude est consommée au cours du traitement de la bauxite pour produire de l'alumine. Plus précisément, cette consommation est liée à trois mécanismes : (i) la formation de phases de silico-aluminate de sodium insolubles au cours de l'attaque (étape de digestion **1120**) ; (ii) la soude résiduelle entraînée avec les boues (**1140**) malgré leur lavage (étape **1142**) ; (iii) la co-précipitation avec l'alumine au cours de la phase de cristallisation (**1170**). Ces pertes doivent être compensées par l'ajout de soude neuve (étape **1110**). Dans la mesure du possible toutes les phases liquides de lavage comportant de la soude (y compris lors du nettoyage chimique des bacs et de tuyauteries) sont recyclées dans la liqueur Bayer.

### 2. Le prétraitement de la bauxite selon l'invention

### 2,1 Présentation générale

Un mode de réalisation du procédé selon l'invention est illustré sur la figure 2. Il comprend un prétraitement de la bauxite. La bauxite prétraitée est introduite dans le procédé Bayer. Les étapes du procédé Bayer notées **11xx** et **12xx** sur la figure 1 sont désignées sur la figure 2 par les repères **21xx** et **22xx,** alors que les étapes de prétraitement portent les repères **20xx.**

Selon un mode de réalisation très avantageux de l'invention certaines conditions opératoires de ce procédé Bayer sont adaptées à la composition chimique et minéralurgique de la bauxite prétraitée ; cela sera expliqué ci-dessous en plus grand détail. La bauxite prétraitée est un produit qui n'existe pas en tant que tel dans la nature, c'est nécessairement un produit résultant d'un procédé industriel, à savoir du procédé de prétraitement. Sa composition chimique se distingue de celle de la bauxite naturelle dont elle est issue par deux caractéristiques essentielles : elle présente un rapport A/S supérieur (car elle comporte moins de silicates), et elle ne comporte plus que très peu d'eau de cristallisation. Par ailleurs, sa composition minéralurgique est différente, suite aux transformations qu'elle subit lors des différentes étapes du prétraitement, comme cela sera expliqué en plus grand détail ci-dessous. Pour les bauxites diasporiques contenant de la silice majoritairement sous forme de kaolinite, les différences essentielles concernent la déshydratation du diaspore et sa transformation en alumine majoritairement alpha, ainsi que la kaolinite qui après sa déshydratation se transforme en metakaolinite (comme cela est expliqué en section 2.3 ci-dessous), permettant la solubilisation de la silice par la soude.

La très faible teneur en eau de cristallisation distingue la composition chimique de la bauxite prétraitée aussi de celle des bauxites naturelles à rapport A/S similaire. La perte en eau de cristallisation est le principal paramètre qui entre dans la perte (de masse) au feu. A titre d'exemple, une bauxite naturelle diasporique présente en général une perte au feu supérieure à environ 10 %, alors qu'une bauxite prétraitée selon l'invention présente une perte au feu inférieure à 2,5 %, de préférence inférieure à 2,0 %, et encore plus préférentiellement inférieure à 1,5 %. La perte au feu est un paramètre connu de l'homme du métier ; des explications complémentaires sont données ci-dessous en section 2.3.

Selon l'invention, la bauxite en provenance d'un mine de bauxite est broyée (étape **2000**) après l'ajout d'eau (étape **2002**), filtrée (étape **2004**), et le résidu solide après filtration (étape **2004**) est calciné (étape **2010**). Nous appelons ce produit intermédiaire ici « bauxite calcinée ». On ajoute une solution aqueuse de soude (étape **2020**) et procède à la lixiviation de la bauxite calcinée (étape **2030**). Après la séparation de phase (étape **2040**) on récupère la phase solide qui est appelée ici « bauxite calcinée lixiviée » ou « bauxite prétraitée » et l'introduit dans le procédé Bayer ; en fonction de la taille de grain obtenue lors du broyage à l'étape **2000** il peut être nécessaire de la rebroyer (étape **2100,** non représentée sur la figure 2). La phase liquide issue de la séparation de phase à l'étape **2040** est traitée à la chaux pour précipiter les silicates (étape **2050**). Après une nouvelle séparation de phase (étape **2060**) on récupère le résidu, une boue blanche (étape **2070**). La phase liquide issue de la séparation de phase à l'étape **2060** est une solution aqueuse de soude ; elle est récupérée (étape **2080**) et recyclée en partie dans la solution d'attaque du procédé Bayer. Avantageusement la chaux (**2052**) est introduite sous la forme de lait de chaux.

Selon l'invention ce procédé de prétraitement peut comporter de nombreuses variantes. A titre d'exemple, l'étape de séparation de phase **2060** peut être suivie d'une étape supplémentaire de filtration de la phase liquide (étape non représentée sur la figure 2, désignée ici **2062**). Il peut comprendre un lavage des boues blanches (étape non représentée sur la figure 2, désignée ici **2064**) après l'étape de séparation de phase **2060,** l'eau de lavage étant recyclée à l'étape **1150.** Ces deux variantes peuvent être combinées. La bauxite peut aussi être broyée à sec, et dans ce cas on passe directement à l'étape de calcination (**2010**).

Comme cela sera expliqué ci-dessous en détail, la mise en oeuvre de la bauxite prétraitée dans le procédé Bayer peut se faire dans la même usine, i.e. avec les mêmes équipements, et selon le même schéma de procédé, que la mise en oeuvre de la bauxite non prétraitée. (La seule exception est l'étape d'évaporation **2210** qui peut être supprimée dans certaines variantes du procédé selon l'invention). Cependant, si l'on utilise pour la mise en oeuvre de la bauxite prétraitée les mêmes paramètres opératoires (par exemple la durée, la température et/ou la concentration de la soude) on obtient un résultat différent de celui qui serait obtenu avec une bauxite non traitée. Pour cette raison, dans certains modes de réalisation avantageux de l'invention, pour certaines étapes du procédé Bayer mises en oeuvre avec de la bauxite prétraitée selon l'invention les paramètres opératoires sont modifiées par rapport à un fonctionnement habituel du procédé Bayer.

Les inventeurs ont trouvé que la température de la calcination (étape **2010**) de la bauxite influe fortement sur le rendement d'extraction de l'alumine de la bauxite lixiviée. Selon l'invention cette température doit être supérieure à 980°C pour une bauxite diasporique. Pour une température de calcination de 980°C ou inférieure, la kaolinite est activée et n'est pas complètement transformée, elle réagit à la lixiviation (étape **2030**) pour donner un composé insoluble du type zéolite. Pour cette raison une température de calcination supérieure à 990°C est préférée. Selon un mode de réalisation avantageux elle est supérieure à 1 000°C. Pour une température comprise entre 1 010 °C et 1 035 °C la transformation de la kaolinite est totale ; on préfère une température entre 1 020 °C et 1 030 °C. Le procédé de calcination est suivi d'une lixiviation qui sera expliquée ci-dessous.

La bauxite prétraitée, améliorée qui résulte de ce procédé de calcination - lixiviation (Roast -Leach) peut être introduite telle quelle dans le procédé Bayer.

Selon un mode de réalisation avantageux de l'invention ce procédé est modifié. Plus précisément, certains paramètres opérationnels sont modifiés, ce qui permet de réduire sensiblement, entre autres, la consommation d'énergie.

### 2.2 Modes de réalisation particuliers

Pour illustrer des modes de réalisation de l'invention, nous précisons ici certaines étapes du procédé de prétraitement.

### Broyage (étape 2000)

A l'étape **2000** le broyage peut être effectué dans un broyeur cylindrique contenant des boulets ou des barres en acier. La quantité d'eau (étape **2002**) peut être de l'ordre de 0,7 m³ par tonne de bauxite, avec une charge de bauxite de l'ordre de 1 000 kg par m³. On obtient ainsi une suspension d'eau et de bauxite qui peut être séparée par filtration sur un filtre-presse (étape **2004**). Une imprégnation résiduelle d'eau de l'ordre de 10 % massiques est acceptable. La taille de grains visée au broyage peut être la même que celle dans le cas du procédé Bayer traditionnel, à savoir quelques centaines de µm.

### Calcination (étape 2010)

La calcination à l'étape **2010** peut être effectuée dans un four de type rotatif ou statique. Le chauffage progressif permet d'éliminer l'eau d'imprégnation du minerai, puis l'eau de constitution, des phases cristallines présentes dans la bauxite, puis d'opérer la transformation de ces phases, aux températures indiquées ci-dessus. Dans ces conditions, on observe que :
- La silice qui était présente sous forme de silicates est transformée en majeure partie en silice amorphe ;
- Les phases diaspore et boehmite sont transformés en alumine de type « alpha » ;
- Le fer qui était présent sous forme de goethite (FeO(OH)) est, après la calcination, transformé en hématite (Fe₂O₃) ;
- Les phases contenant du carbone, des carbonates et du soufre sont dissociées thermiquement sous forme principalement de CO₂ et de SO₂ pour la partie volatile.

### Lixiviation (étape 2030)

Après la calcination la bauxite calcinée est plongée dans une solution de soude (étape **2020**). Cette étape de lixiviation (étape **2030**) permet de solubiliser la silice transformée ainsi que certaines impuretés. La teneur en soude de la phase liquide peut être comprise entre environ 70 g NaOH/L et environ 160 g NaOH/L, préférentiellement entre environ 90 g/L et environ 150 g NaOH/L, et encore plus préférentiellement entre environ 110 g/L et environ 140 g NaOH/L. A titre d'exemple, une teneur de 129 g NaOH /L a été utilisée avec succès. Cette solution peut être obtenue à partir d'un mélange de soude recyclée et de lessive de soude à 50% dont les quantités sont ajustées pour obtenir la concentration nécessaire pour la lixiviation. Au-dessous de 70 g/L on dissout une fraction trop faible de la silice lixiviable, on a besoin d'un temps de séjour (i.e. d'un temps de contact entre la phase solide et la phase liquide) trop important, et on dilue trop le stock de solution de soude circulant dans les installations du procédé. Au-dessus de 150 g/L le risque de perte d'aluminium par dissolution d'alumine devient significatif. La température de la solution aqueuse de soude est typiquement comprise entre 80 °C et 120 °C ; si la température est trop faible la silice se dissout mal, si la température est trop élevée on tend à dissoudre de l'alumine.

A titre d'exemple, la bauxite calcinée et la solution de soude (**2010**) peuvent être introduites dans un bac réacteur agité de manière à obtenir une suspension initiale contenant environ 80 kg/m³ de solide. Une température de réaction d'environ 100°C convient ; le temps de séjour à la température de réaction peut être de l'ordre de 45 mn.

### Séparation de phases (étape 2040)

La séparation de phases à l'étape **2040** peut se faire par filtration sur un filtre, du type filtre-presse, alimenté par la suspension issue du réacteur de la lixiviation (**2030**). Le résidu solide est la « bauxite calcinée lixiviée » ou « bauxite prétraitée ; une imprégnation résiduelle de liqueur de lixiviation de l'ordre de 10 % massiques est acceptable. La phase liquide est une liqueur chargée en silice dissoute issue lors de la lixiviation (**2030**) ; elle est épurée en ajoutant de la chaux (**2052**). La matière première est avantageusement constituée de chaux vive (CaO) ou de lait de chaux (Ca(OH)₂). On préfère utiliser une chaux vive à granulométrie fine, contenant au moins 85 % de CaO ; typiquement elle contient entre 85% et 95% de CaO. Le lait de chaux peut être fabriqué par extinction de cette chaux (de l'ordre de 100 kg de CaO/m³) avec de l'eau chaude dans un bac réacteur agité.

### Précipitation des silicates (étape 2050) et flux des phases

L'étape de précipitation des silicates (étape **2050**) permet de former un silicate de calcium insoluble. La précipitation de la silice peut se faire dans un bac réacteur sous agitation en présence de chaux vive ou de lait de chaux (100 g CaO/L) à 100°C durant 2 heures. Le rapport stoechiométrique CaO : SiO₂ est avantageusement compris entre 1,1 et 1,5. On obtient typiquement une suspension qui contient, en fin d'opération, de l'ordre de 35 kg/m³ à 50 kg/m³ de solide, de préférence entre 39 kg/m³ et 46 kg/m³ de solide.

La séparation de phase (étape **2060**) peut se faire avantageusement par décantation de la suspension. Selon l'invention la phase liquide claire (« Over-flow ») est avantageusement recyclée dans le circuit de soude du procédé, de préférence en partie à la lixiviation (**2030**), et en partie en amont de l'étape de digestion du procédé Bayer (**2120**).

La suspension épaissie (« Under-flow ») constituée de silicate de calcium (typiquement de 600 à 700 kg de solide/m³), appelée boue blanche (**2070**), est extraite du décanteur. Elle peut alimenter un filtre, du type filtre à bande, sur lequel s'opère un lavage méthodique (étape **2072**) à l'eau afin de diminuer la concentration de la liqueur d'imprégnation. La boue blanche lavée peut avoir une imprégnation résiduelle de liqueur diluée de l'ordre de 10% ; la concentration en soude de cette liqueur d'imprégnation est typiquement de l'ordre de 6 à 10 g NaOH IL. La boue blanche est composé d'un silicate de calcium qui est proche de celle de la Tobermorite (environ Ca_{4,31}Si_{5,51}Al_{0,5}O₁₆(OH)₂ × 4 H₂O). Elle peut être dirigée vers un stockage intermédiaire en attente de sa valorisation.

L'eau de lavage des boues de silicates (boues blanches **2070**) récupérées à l'issue de l'étape **2072** peut rejoindre le circuit de la phase liquide **2080** obtenue à l'étape **2060** pour être utilisé dans l'étape de lixiviation (étape **2030**) et dans le procédé Bayer (étape **2120**). Dans ce dernier cas elle nécessite un réajustement de sa teneur en soude (étape **2110**) qui sera devenue inférieure à la teneur initiale à l'étape **2030** (par exemple 129 g NaOH/l). Ce réajustement est effectué avec l'ajout d'un aliquote de lessive de soude à 50 %.

Le prétraitement selon l'invention génère une certaine perte de soude, par occlusion de sodium dans le silicate précipité et par imprégnation des boues blanches. Cette perte doit être compensée par l'ajout de lessive de soude, typiquement à 50 % (étape **2110**). Cependant, comme cela sera expliqué ci-dessous, le procédé Bayer modifié selon l'invention consomme moins de soude que le procédé Bayer traditionnel, ramené à la tonne d'alumine produite.

La liqueur Bayer est recirculée (étape **2200**) ; elle est constituée d'un mélange de liqueur issue de l'étape de filtration du trihydrate (étape **2180**) ayant subie ou non une concentration par évaporation d'eau (étape **2210**) et ajout de lessive de soude (étape **2110**).

### 2.3 Signification de la perte au feu

On sait que la perte au feu est un paramètre qui fait partie intégrante de la caractérisation usuelle d'une bauxite ; cette valeur, exprimée en pourcents massiques, figure sur le certificat d'analyse qui accompagne toute livraison de bauxite destinée au procédé Bayer. Elle est déterminée en règle générale par calcination à 1060 °C pendant 2 heures, après un séchage préalable à 105 °C. La calcination de la bauxite conduit toujours à une perte nette de masse, qui est provoquée par le départ de matières volatiles, même s'il peut y avoir des réactions d'oxydation qui, prises isolément, conduisent à une augmentation de masse. Ce départ de matières volatiles résulte de phénomènes physiques (notamment de la sublimation) et chimiques (notamment la décomposition thermique, telle que la déshydratation, la deshydroxylation et la dissociation thermique, et la réduction). Plus précisément, la perte au feu correspond principalement à l'élimination de l'eau de constitution (i.e. des molécules d'eau qui sont intégrées dans la structure cristallographique), du dioxyde de carbone issu des matières organiques et des carbonates minéraux, et de certains autres composés volatils, notamment des oxydes de soufre.

La perte au feu de la bauxite dépend de sa composition chimique et minéralurgique. Pour une bauxite destinée au procédé Bayer son ordre de grandeur se situe typiquement entre 10 % et 30 %. Elle peut être déterminée par simple pesée avant et après la calcination dans les conditions indiquées. On peut également utiliser la thermogravimétrie différentielle, qui permet en plus de caractériser les espèces minérales présentes dans la bauxite.

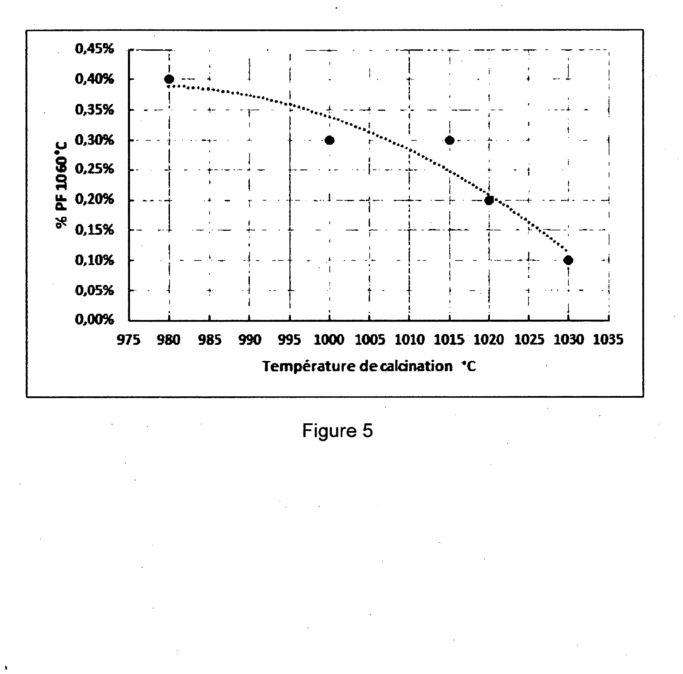

La perte au feu des bauxites diasporiques à haute teneur en silice, qui constituent une matière première utilisable dans le cadre de la présente invention pour préparer la bauxite dite prétraitée, se situe typiquement entre 10 % et 18 %, et plus souvent entre 12 % et 15 %, mais ces chiffres empiriques ne limitent pas la portée de la présente invention. La figure 5 montre la perte au feu (déterminé après calcination à 1060 °C pendant 2 heures) d'une bauxite diasporique calcinée selon l'invention à différentes températures allant de 980 °C à 1030 °C. On voit que la perte au feu après calcination à 1030 °C est extrêmement faible (0,10 %), ou autrement dit : lorsque l'on chauffe ce matériau au-delà de 1030 °C et jusqu'à 1060 °C, la quantité de matière volatile qui se dégage est extrêmement faible.

A titre d'exemple, pour la phase de kaolinite contenue dans la bauxite, le prétraitement par calcination selon l'invention conduit de manière schématique aux réactions suivantes (les indications des températures étant approximatives) :
- Déshydratation endothermique entre 40 °C et 200 °C : Al₂Si₂O₃(OH)₄ × n H₂O se décompose en Al₂Si₂O₅(OH)₄ + n H₂O ;
- Deshydroxylation endothermique entre 530 °C et 590 °C : Al₂Si₂O₅(OH)₄ se décompose en Al₂O₃ × 2 SiO₂ (méta-kaolinite) + H₂O ;
- Dissociation exothermique entre 900 °C et 1000 °C : Al₂O₃ × 2 SiO₂ (méta-kaolinite) se décompose en 2 Al₂O₃ × 3 SiO₂ (pseudo-mullite) + SiO₂ (amorphe) + y Al₂O₃.

### 3. Le procédé Baver modifié selon l'invention, utilisant la bauxite prétraitée

La séparation de phase (étape **2040**) permet, de préférence après filtration, de séparer le solide de la liqueur pour pouvoir utiliser la bauxite prétraitée dans l'étape de digestion (étape **2120**) du procédé Bayer. Les inventeurs ont fait un certain nombre d'observations qui les ont conduits à modifier certaines étapes du procédé Bayer ; cette modification constitue une caractéristique essentielle de la présente invention.

### Digestion (étape 2120)

La digestion consiste à solubiliser les phases alumineuses contenues dans la bauxite prétraitée dans une liqueur de soude. L'alumine alpha contenue dans la bauxite prétraitée, qui a été générée lors de la calcination, est solubilisée par la liqueur Bayer à haute température, en même temps que l'alumine soluble préexistante. Cette étape peut être effectuée dans des conditions de température et de pression similaires à celles du procédé Bayer traditionnel, à savoir : une température typiquement comprise entre 250 °C et 270 °C en autoclaves fermés ou en système tubulaire sous pression (environ 50 bars à 60 bars). Le chauffage se fait avantageusement en augmentant progressivement la température jusqu'à la température de réaction. Le temps de séjour à la température de réaction est avantageusement compris entre 30 min et 60 min, de préférence entre 30 min et 50 min, et encore plus préférentiellement entre 35 min et 45 min.

Selon une caractéristique essentielle du procédé selon l'invention on peut utiliser pour la digestion de la bauxite prétraitée une concentration en soude significativement plus faible que celle utilisée pour une bauxite normale dans le procédé Bayer traditionnel. Plus particulièrement, cette concentration est comprise entre 140 g Na₂O/L et 200 g Na₂O/L, de préférence entre 155 g Na₂O/L et 190 g Na₂O/L, et encore plus préférentiellement entre 160 g Na₂O/L et 180 g Na₂O/L. Cette concentration est avantageusement surveillée de manière continue par la mesure de la conductivité électrique de la liqueur ; elle peut faire également l'objet d'une analyse chimique en laboratoire.

Dans un mode de réalisation, les inventeurs ont constaté que malgré un débit circulant plus important de la liqueur d'attaque (12,11 m³/t contre 8,52 m³/t) dû à une plus faible concentration en soude caustique (162 g/L contre 240 g/L) de la liqueur de digestion les rendements d'extraction de l'alumine restent très élevés ; ils sont supérieurs à 96 % sur alumine moins silice par l'adaptation des paramètres de réglage de l'atelier par exemple, la saturation de la liqueur (concentration en alumine et RP de l'addition de chaux (8 à 10,4 %) et la température (260 °C).

### Evaporation (étape 2210)

A la sortie de la digestion la suspension est détendue, c'est-à-dire elle est ramenée à pression atmosphérique par détentes successives ; cette opération permet d'évaporer une quantité d'eau importante (auto-évaporation).

Puisque le procédé selon l'invention utilise une liqueur Bayer à concentration en soude significativement plus faible que le procédé Bayer traditionnel, la quantité d'eau à évaporer est beaucoup plus faible. Par ailleurs, la bauxite prétraitée génère moins de boues rouges (**2140**) que la majorité de bauxites naturelles, ce qui réduit la quantité d'eau de lavage (**2150**) des boues nécessaire, sachant que cette eau de lavage chargée de soude sera introduite dans le circuit de la liqueur Bayer. Dans certains cas l'évaporation lors de la détente de l'autoclave (étape **2124**) à la digestion (**2120**) est suffisante pour maintenir la concentration de la liqueur d'aluminate recyclée (**2220**) ; l'étape d'évaporation **2210** peut alors être omise. L'étape d'évaporation **2210** consomme de l'énergie thermique et nécessite un investissement significatif en évaporateurs ; le fait de pouvoir minimiser voire même supprimer cette étape présente un intérêt économique important.

On note que s'il existe des usines exploitant le procédé Bayer traditionnel qui n'effectuent pas l'étape évaporation **1210,** à savoir des usines qui utilisent exclusivement une bauxite générant une quantité particulièrement faible de boues rouges, la suppression de cette étape serait totalement impossible dans le cas de bauxites à faible rapport AIS digérées avec le procédé Bayer traditionnel.

### Décantation des boues rouge (étape 2130)

A la sortie de la digestion la suspension est diluée avec une liqueur d'aluminate provenant du premier étage de lavage des boues rouges à l'étape **2140.** Cette dilution est régulée en fonction de l'entrée d'eau de lavage. Elle permet d'atteindre une concentration de la liqueur compatible avec la séparation solide-liquide et la cristallisation à l'étape **2160.**

La décantation s'effectue dans un appareil nommé « décanteur », bac de grand diamètre (la plupart du temps avec un fond plat ou conique) muni d'une agitation lente permettant la séparation. La décantation est optimisée par l'emploi d'additifs appelés floculant afin d'augmenter la vitesse de sédimentation des particules solides.

Dans le procédé selon l'invention, l'absence de certaines phases comme la goethite, qui a été transformée lors de la calcination de la bauxite à l'étape **2010** et qui est connue pour gêner la floculation, permet de réduire la quantité de floculant employée.

Typiquement, la suspension épaissie (Under-flow) est envoyée vers le premier étage de lavage. La liqueur clarifiée (Over-flow) est envoyée vers la filtration dite « de sécurité » qui a pour but d'éliminer les très fines particules de boues afin de garantir une liqueur exempte d'impuretés vers la cristallisation.

### Lavage des boues rouge (étape 2140)

Le lavage des boues rouges à l'étape **2140** s'effectue de préférence à contre-courant ; l'eau de lavage est introduite au dernier étage de la chaîne de laveurs. La chaîne de laveurs peut être complétée par une filtration des boues issues du dernier laveur en utilisant un filtre-presse. L'emploi de floculant permet d'améliorer la sédimentation afin d'assurer un meilleur lavage des boues.

Toutes conditions égales par ailleurs, la plus faible quantité de boues rouge et leur meilleure aptitude à la décantation permet d'améliorer très sensiblement le lavage puisque la quantité d'eau disponible pour cette opération reste la même pour une quantité de solide moindre. En conservant des efficacités de lavage identiques (bauxite brute et bauxite prétraitée) il est possible de diminuer la quantité d'eau, ce qui a pour conséquence de diminuer fortement l'évaporation, comme cela sera expliqué ci-dessous, et faire ainsi d'importantes économies d'énergie.

De manière plus précise, la faible quantité de boues rouges générées (réduite typiquement d'environ 60%) par la digestion (**2120**) de la bauxite prétraitée nécessite une quantité d'eau plus faible (réduite typiquement d'environ 50 %) que celle nécessaire au lavage des boues générées par la digestion d'une bauxite non traitée.

A titre d'exemple, la quantité d'eau de lavage et le tonnage de boues sont les suivants :
- 3,04 m³/t d'eau pour 1,063 t/t de boues après lavage dans le cas d'une bauxite traitée par le procédé selon l'invention,
- 5,70 m³/t d'eau pour 3,040 t/t de boues après lavage dans le cas d'une bauxite brute.

Les inventeurs ont trouvé qu'avec la bauxite prétraitée par le procédé selon l'invention, l'ajustement judicieux des principaux paramètres du procédé Bayer, en particulier à l'attaque (temps de séjour, saturation des liqueurs, quantité de chaux ajoutée, etc.) permet de conserver d'excellents rendements de solubilisation de l'alumine (supérieurs à 96% sur alumine moins silice) avec des liqueurs d'attaque à faible concentration en soude caustique (de l'ordre de 160 à 170 g/L pour 238 g/L à 240 g/L pour les attaques classiques). Ces résultats et l'amélioration de l'efficacité du lavage des boues permettent de conduire le cycle de la liqueur Bayer à faible concentration en soude caustique, générant une économie importante d'énergie et des coûts de maintenance au niveau de l'atelier d'évaporation. En supprimant l'étape d'évaporation **2210** on fait en plus l'économie de l'investissement dans un atelier d'évaporation dans le cas d'une nouvelle ligne de production.

### Décantation des boues blanches (étape 2040)

Le procédé selon l'invention conduit à une réduction significative de la quantité de boues, même en tenant compte du fait que l'étape de désilication (**2050**) (appelée aussi « désilicatation ») par précipitation des silicates génère des boues spécifiques (« boues blanches ») qui n'apparaissent pas dans le procédé Bayer traditionnel avec des bauxites non prétraitées : dans le procédé selon l'invention on constate que la réduction de la quantité des boues rouges est très supérieure à la quantité des boues blanches. Par ailleurs, le sort ultérieur (et la possible valorisation dans des produits utilisables) de ces types de boues n'est pas le même. Le procédé selon l'invention diminue la quantité de boues à décanter (étapes **2040, 2060** et **2130**), typiquement de 10 à 40%, et de préférence de 20 % à 40 %. Pour les boues rouges cette réduction peut atteindre 65 % (étape **2130**). En outre ces boues présentent une meilleure aptitude à la décantation à cause de la transformation, au cours de la phase de calcination du minerai, de la goethite en hématite. Ces deux avantages entraînent de nombreux autres effets positifs : la facilité de conduite de l'atelier (lié à la réduction des quantités de boues à gérer), la diminution de la consommation d'énergie électrique, la diminution de la consommation de floculant, l'optimisation des coûts de maintenance de l'atelier.

### Consommation de soude et consommation énergétique du procédé selon l'invention

La consommation de soude lors du procédé Bayer est liée à la formation de composés solides incluant du sodium (silicoaluminate, sodium cristallisé avec l'alumine) d'une part et à la perte sous forme liquide de soude (liqueur d'imprégnation des boues rouges, et du trihydrate) d'autre part. Le procédé de prétraitement par calcination-lixiviation génère aussi des pertes par occlusion de sodium (occlusion dans le silicate) et par pertes sous forme liquide de soude (imprégnation des boues blanches). Toutes ces pertes sont compensées par un ajout de lessive de soude à 50%.

La consommation énergétique du procédé Bayer pour des bauxites diasporiques de faible rapport AI/Si est de l'ordre de 8 GJ par tonne d'alumine obtenue, sans prendre en compte la calcination du trihydrate (étape **1194, 2194**) ; dans la mesure où la consommation énergétique de la calcination du trihydrate ne dépend pas de l'origine de la bauxite, on compare ici uniquement le procédé jusqu'au trihydrate (**1190**, **2190**). Pour une bauxite prétraitée selon l'invention, en utilisant une bauxite de karst naturelle de faible rapport Al/Si cette consommation est diminuée de 1,9 GJ/t grâce à la suppression de l'étape d'évaporation **2210.** Sachant que le procédé de prétraitement, comprenant l'étape de calcination (**2010**) et l'étape de lixiviation (**2030**), ajoute une consommation d'environ 2,2 GJ par tonne d'alumine obtenue, on constate que le procédé selon l'invention conduit à une surconsommation énergétique de 0,3 GJ par tonne d'alumine. Cette surconsommation correspond à environ 4 % de la consommation énergétique du procédé selon l'invention.

Cette surconsommation est très faible, car le procédé selon l'invention augmente le rendement d'extraction de l'alumine de la bauxite : dans l'exemple utilisé pour l'estimation de la consommation énergétique ci-dessus, le procédé selon l'invention permet d'abaisser la quantité de bauxite de karst de faible rapport AI/Si nécessaire pour obtenir une tonne d'alumine d'environ 3,5 t à environ 2,6 t.

Par ailleurs, comme cela a déjà été mentionné, le procédé selon l'invention consomme moins d'eau et moins de soude que le procédé Bayer traditionnel appliqué à une bauxite de karst pauvre. Dans l'exemple ci-dessus, la consommation de soude passe de 490 kg de NaOH à 104 kg de NaOH par tonne d'alumine produite. La consommation de chaux double certes, d'environ 360 kg par tonne d'alumine à environ 800 kg par tonne d'alumine, mais le coût de la chaux s'élève à environ 10 % du coût de la NaOH.

Ces économies restent très intéressantes même lorsque l'on tient compte de l'investissement nécessaire pour les étapes supplémentaires du prétraitement. Cet investissement consiste à ajouter une unité de prétraitement à une usine existante qui exploite le procédé Bayer : aucune modification des équipements n'est nécessaire au sein de cette usine existante (hormis l'intégration des flux de liqueur Bayer entre les deux unités « prétraitement » et « Bayer » qui relève de la tuyauterie) : la modification qu'apporte la présente invention au procédé Bayer est significative, mais elle ne concerne que les paramètres opératoires du procédé Bayer, et non pas l'équipement industriel.

On voit donc que sur le plan économique le procédé est largement gagnant. Par ailleurs, la réduction significative de la quantité des boues rouges, qui tendent à avoir une valeur économique négative, diminue aussi le coût de leur retraitement et stockage. En ce qui concerne les boues blanches (essentiellement des silicates), elles comportent moins de métaux lourds et autres substances potentiellement toxiques (si elles venaient à passer en solution) que les boues rouges ; leur valeur économique n'est pas négative. En effet la minéralogie du silicate de calcium sous forme de Tobermorite laisse entrevoir des applications notamment dans le domaine de la construction.

Le plus grand avantage du procédé selon l'invention est certainement la possibilité d'augmenter les gisements valorisables en bauxite dans la comptabilité (microéconomique ou macroéconomique), en permettant d'utiliser des ressources minérales qui ne peuvent pas être utilisés avec les procédés selon l'état de la technique dans des conditions économiques compétitives. La possibilité ainsi offerte à certaines usines d'utiliser des bauxites provenant de mines géographiquement proches engendre des économies connexes de coût de transport.

Il est bien évidemment envisageable, et cela rentre dans le cadre de la présente invention, d'alimenter une usine Bayer, dont le procédé a été modifié selon l'invention, avec de la bauxite prétraitée qui n'a pas été prétraitée sur le même site : cette bauxite prétraitée peut provenir soit d'une usine de prétraitement de bauxite séparée (par exemple installée à proximité d'une mine de bauxite, afin de réaliser des économies de coût de transport de la bauxite), soit d'une usine intégrée (unité de prétraitement + unité de Bayer) qui est surcapacitaire en bauxite prétraitée. Ce premier mode de réalisation avec une unité de prétraitement séparée n'est cependant pas préféré car la valorisation de la phase liquide chargée de soude issue de l'étape de lixiviation **2040** et du lavage des boues blanches **2072** ne peut dans ce cas pas se faire par recirculation dans la liqueur Bayer.

### 4. Autres avantages du procédé selon l'invention

Comme indiqué ci-dessus, le procédé selon l'invention présente de nombreux avantages. Son avantage principal est de permettre la mise en oeuvre, dans le cadre du procédé Bayer, des bauxites à faible rapport Al/Si qui ne peuvent être utilisées selon l'état de la technique, ou avec un faible rendement seulement, et avec un coût de production significativement plus élevé comparé aux bauxites d'un rapport AI/Si plus élevé.

Un autre avantage est que le prétraitement selon l'invention élimine non seulement le silicium, mais aussi la quasi-totalité du carbone organique et une grande partie du soufre naturellement contenus dans la bauxite. On sait que le carbone organique s'accumule dans la liqueur d'aluminate de soude et une partie peut précipiter sous forme d'oxalate sur le trihydrate. On sait que dans le cas désirable où la concentration en oxalate de la liqueur Bayer est faible, on dispose d'une plus grande latitude pour adapter les paramètres de l'étape **2160** de décomposition (notamment la température, le temps de séjour et le taux de recyclage des amorces) aux besoins d'obtenir un produit avec une taille de particules, une distribution de la taille des particules et une forme de cristallites contrôlées. Par ailleurs, le rendement de cette étape de cristallisation est plus élevé si la concentration en oxalate de la liqueur Bayer est faible.

Un autre avantage est que la quantité de boues rouges se trouve réduite (jusqu'à 60 %). Cela présente deux avantages : au niveau de la séparation de phase, et au niveau de leur traitement ultime. Plus précisément, le procédé selon l'invention permet de réduire la quantité des boues rouges ; il génère certes un nouveau type de résidu, les boues blanches, mais la somme des boues blanches et rouges est réduite (jusqu'à 25%) par rapport aux boues rouges selon le procédé Bayer traditionnel. En plus de la diminution de quantité des boues, on observe que les boues rouges générées dans le procédé selon l'invention montrent une meilleure aptitude à la décantation (à cause de la transformation au cours de la calcination (étape **2010**) de la goethite en hématite), ce qui permet de diminuer la quantité d'agent floculant ajoutée aux suspensions, à faciliter la gestion de l'atelier de décantation, à diminuer le coût de sa maintenance, et à diminuer la consommation d'énergie électrique.

Un autre avantage est la possible diminution de dépôt dur d'alumino-silicates sur les surfaces des différents équipements utilisés dans la digestion (étape **2120**) et en aval de l'étape de digestion ; ce dépôt dur tend à gêner l'échange thermique et doit être enlevé de temps en temps dans des opérations de maintenance spécifiques.

Encore un autre avantage est que la teneur résiduelle en fer et silice de l'alumine obtenue par le procédé selon l'invention est particulièrement faible.

Un autre avantage, déjà mentionné ci-dessus, est la diminution de la quantité d'eau à évaporer à l'étape d'évaporation d'eau (étape **2210**), qui peut être supprimée dans de nombreux cas. Cela contribue significativement à l'économie d'énergie.

Le procédé selon l'invention comporte une étape supplémentaire de calcination (étape **2010**) qui consomme de l'énergie thermique et de la soude. Cependant, cette soude peut être recyclée en grande partie dans le procédé Bayer et la consommation d'énergie de l'étape de calcination est quasiment compensée par l'économie faite sur le procédé Bayer.

Le procédé selon l'invention peut être utilisé de manière avantageuse avec une bauxite prétraitée obtenue à partir des bauxites naturelles présentant un rapport A/S compris entre 1 et 8 et de préférence entre 1,5 et 7. En dessus d'une valeur de 7 ou 8 le bénéfice en termes d'alumine additionnelle rendue disponible par le procédé de prétraitement de la bauxite par calcination et lixiviation devient plus faible, et l'avantage de la diminution de la consommation de soude est plus limité car il y a moins de silice susceptible d'entraîner de la soude. Ce seuil supérieur dépend de certains paramètres technico-économiques qui peuvent varier en fonction des données économiques. Pour une valeur de 1 la ressource minérale est surtout de la kaolinite, qui a d'autres applications techniques. Les bauxites naturelles ont rarement un rapport de A/S inférieur à environ 2,5 ou 2, et la limite inférieure préférée du procédé selon l'invention est l'utilisation d'une bauxite prétraitée obtenue à partir d'une bauxite naturelle présentant un rapport A/S égal à 2.

### Exemples

### Exemple 1 : Bauxite de Jiaokou

On a approvisionné une poudre de bauxite de Jiaokou (Chine) dont l'analyse chimique est détaillée dans le tableau 1 ci-dessous.

**Tableau 1**

| Composition chimique de la bauxite de Jiaokou | | | | | | | | |
|---|---|---|---|---|---|---|---|---|
| Al₂O₃ | SiO₂ | Fe₂O₃ | TiO₂ | MgO | CaO | K₂O | CO₂ total | S total |
| 61,4 | 13,46 | 4,4 | 2,8 | 0,25 | 1,15 | 0,39 | 0,82 | 0,05 |

Ce minerai brut contient une quantité d'alumine relativement importante, mais est également riche en silicium (rapport A/S faible, d'environ 4,6), et la silice est principalement présente sous la forme de kaolinite (88 %), le reste (12 %) étant sous la forme de muscovite.

On a calciné des échantillons de 200 g de cette bauxite à 980 °C ou à 1 030 °C. La calcination a été faite dans un four moufle préchauffé à 200 °C - 250 °C, avec une montée en température la plus rapidement possible. La durée de calcination était de 30 minutes à la température visée (980 °C ou 1 030 °C). A la fin de la calcination la bauxite a été refroidie dans un dessiccateur. Sa composition chimique a été analyse par fluorescence X, sa structure par diffraction des rayons X, sa teneur en matière volatile (en anglais « loss on ignition », abrégé LOI) par pesée avant et après chauffage à 1060°C.

La lixiviation a été réalisée sur une suspension à raison de 90 g/L de bauxite calcinée, avec une solution de soude pure à 100 g/L de Na₂O, pour un volume de suspension de 500 mL. La suspension ainsi obtenue a été maintenue pendant une heure à 100 °C, et a ensuite été filtrée sur un filtre Millipore à membrane (5 µm). Le filtrat a été conservé à l'étuve à 90 °C, un aliquote a été prélevé pour analyse. La bauxite lixiviée a été lavée et séchée.

Sur la bauxite calcinée à 980 °C une autre lixiviation a été essayée, avec une solution de soude à 260 g/L de Na₂O.

La calcination de la bauxite à 980 °C n'ayant pas permis d'obtenir une bonne désilicatation, les essais de digestion n'ont été effectués qu'avec la bauxite calcinée à 1 030 °C. La bauxite calcinée et lixiviée a été attaquée à 260 °C avec un temps de séjour de 40 min ou de 60 min, selon le protocole suivant :
(i) Montée en température 4°C/min jusqu'à un premier palier à 175 °C, durée du palier 5 min ;
(ii) Montée en température 1,5 °C/min jusqu'à un second palier à 255 °C, durée du palier 5 min ;
(iii) Montée en température 1 °C/min jusqu'à un troisième palier à 260 °C, durée du palier 40 min ou 60 min.

La phase aqueuse d'attaque a été une liqueur Bayer industrielle de composition (en g/L) :
Na₂O ctq = 238,0 ; Al₂O₃ = 128,6 ; Rp = 0,540 ; Na₂O cbte = 17,2 ; SiO₂ = 1,5 ; CaO = 0,001 ; Fe₂O₃ = 0,008 ; V₂O₅ = 0,020 ; C org = 2,4 ; Densité à 20 °C = 1,3777

(La désignation « Na₂O ctq » se réfère à la fraction utile (« caustique ») de la soude, alors que la désignation « Na₂O cbte » se réfère à la fraction du Na₂O qui correspond aux résidus de carbonate (« cbte ») ; cette distinction est possible en analysant la phase liquide par titrage pH-métrique selon une méthode connue de l'homme du métier).

Le silicium a été précipité par ajout de lait de chaux ; la quantité de chaux ajoutée variait entre 2,5 % et 4 %. Cela est décrit en plus grand détail dans l'exemple 2 ci-dessous.

La charge de bauxite a été ajustée pour obtenir une valeur de RP (rapport alumine / soude) en fin d'attaque qui variait entre 1,00 et 1,28.

### Exemple 2 : Essais de désilication

On a effectué différents essais de désilication, selon deux axes :
Dans une première série d'essais on a testé différentes matières premières de chaux permettant d'épurer le lixiviat (i.e. de précipiter la silice), et dans une seconde série d'essais on a testé l'efficacité de l'épuration en fonction de la concentration du lixiviat.

### a) Essais sur la matière première de chaux (comparaison chaux solide et lait de chaux

La précipitation de la silice a été effectuée avec du lait de chaux à 100 g/L de CaO et avec du CaO solide, à une température de 100 °C pendant 2 heures. Le lait de chaux a été préparé sous agitation à 70 °C pendant 90 min puis à 85 °C pendant 60 min.

Apres précipitation et filtration, le filtrat a été analysé (SiO₂, CaO et Al₂O₃) et le gâteau de filtration a été caractérisé par analyses chimiques (SiO₂, CaO et Al₂O₃), diffraction aux rayons X et microscopie électronique à balayage (MEB).

La précipitation de la silice a été effectuée sur un volume de 300 ml de la solution de première filtration à chaud de l'essai de lixiviation d'une bauxite Wanji calcinée à 1 020 °C. Ainsi, deux essais ont été réalisés, l'un pour la précipitation avec le lait de chaux et l'autre pour la précipitation avec de la chaux solide.

Deux analyses préliminaires sur une solution de lixiviation ont montré que la concentration en SiO₂ était de 5,79 et 6,10 g/L, soit une teneur moyenne de 5,96 g/L ([Si] = 0,1 M/L). Ainsi, pour une stoechiométrie Ca/Si de 1,2, il faut introduire 2,03 g de CaO solide ou 20 ml de lait de chaux dans le volume de 300 ml de solution de lixiviation.

Toutefois, on a utilisé une quantité légèrement supérieure, de 2,53 g de chaux solide et de 25 ml de lait de chaux, ce qui correspond à une stoechiométrie de l'ordre de 1,5.

Les résultats des analyses en SiO₂, Al₂O₃ et CaO, des solutions avant et après précipitation et des précipités, sont consignes dans le tableau 2 et les taux de précipitation de SiO₂ et Al₂O₃ figurent dans le tableau 3.

On en déduit que le lait de chaux précipite mieux la silice (87 %) que la chaux solide (74%), mais il précipite aussi un peu plus d'aluminium (49 % au lieu 37 % pour CaO solide). On note également que le lait de chaux n'affecte quasiment pas la teneur de la solution en calcium.

**Tableau 2**

| Analyses des solutions et des précipités des essais de précipitation de la Silice avec chaux solide et le lait de chaux ; Bauxite WANJI calcinée à 1 020 °C. | | | | | | | | | |
|---|---|---|---|---|---|---|---|---|---|
| Précipitation avec | Solution de lixiviation [g/L] | | | Filtrat précipitation [g/L] | | | Précipité [%] | | |
| | SiO₂ | Al₂O₃ | CaO | SiO₂ | Al₂O₃ | CaO | SiO₂ | Al₂O₃ | CaO |
| Chaux solide | 5,794 | 1,849 | 0,012 | 1,528 | 1,117 | 0,035 | 26,49 | 3.76 | 39,05 |
| Lait de chaux | 6,081 | 1,830 | 0,015 | 0,782 | 0,937 | 0,011 | 26,76 | 4,03 | 42,39 |

**Tableau 3**

| Taux de précipitation de SiO₂ et Al₂O₃ avec CaO solide et le lait de chaux, à partir des solutions de lixiviation de la bauxite Wanji calcinée à 1 020 °C. | | |
|---|---|---|
| Précipitation avec | Taux de précipitation % | |
| | SiO₂ | Al₂O₃ |
| CaO solide | 74 | 37 |
| Lait de chaux | 87 | 49 |

La caractérisation des précipités par diffraction des rayons X montre qu'ils sont composés des mêmes phases cristallisées, la Tobermorite formée lors de la précipitation de Si par la portlandite, et la calcite qui était déjà présente dans la chaux utilisée.

Les observations et microanalyses effectuées au MEB (cf. tableau 4 ci-dessous) indiquent que la Tobermorite est substituée par Al, Na et parfois Mg, et qu'elle se présente sous forme d'agrégats de particules d'aspect floconneux qui rappellent les CSH (Calcium Silicates Hydrates).

**Tableau 4**

| Analyses de la chaux et du lait de chaux au MEB | | |
|---|---|---|
| Eléments [% massiques] | Précipitation avec | |
| | Chaux solide | Lait de chaux |
| Na₂O | 3,53 | 1,21 |
| MqO | 0,65 | 0,83 |
| Al₂O₃ | 4,36 | 3,97 |
| SiO₂ | 24,66 | 20,57 |
| CaO | 30,48 | 30,24 |

Après lixiviation, la précipitation de la silice mise en solution est plus efficace avec le lait de chaux qu'avec la chaux solide. On note une plus grande insolubilisation de la soude avec la chaux solide.

### b) Essais sur la concentration de chaux

Pour définir la concentration optimale pour la desilicatation des lixiviats deux concentrations ont été testées. Ces essais ont été réalisés à partir des liqueurs de lixiviations de la bauxite de Jaiokou calcinée à 1 030°C, comme cela a été décrit dans l'exemple 1 ci-dessus.

La précipitation de la silice a été effectuée avec du lait de chaux à 100 g/L de CaO (chaux provenant d'une usine chinoise) à une température de 98°C durant 2 heures. Le tableau 5 ci-dessous indique la composition chimique de cette chaux.

**Tableau 5**

| Analyse chimique de la chaux utilisée pour fabriquer le lait de chaux (en % massiques) | | | | | | | |
|---|---|---|---|---|---|---|---|
| Al₂O₃ | TiO₂ | Fe₂O₃ | SiO₂ | CaO | Na₂O | Perte au feu | Total |
| 1,50 | 0,06 | 0,50 | 1,64 | 90,71 | 0,03 | 5,80 | 100,26 |

Les essais ont été effectués avec une charge en CaO correspondant à 110 % de la stoechiométrie SiO₂+Al₂O₃. Les analyses et méthodes utilisées sont les suivantes :
- Boues : PAF, Al₂O₃, TiO₂, Fe₂O₃, CaO, SiO₂, Na₂O, Carbone total et DRX
- Liqueurs : Thermogravimétrie Metrohm ^{™}, ICP complète, Chromatographie complète et Phénix^{™} (Carbone organique, Carbone minéral).

Les conditions des essais sont résumées dans le tableau 6 ci-dessous. Le tableau 7 indique le résultat de l'analyse chimique de la liqueur avant désilicatation, le tableau 8 indique le résultat de l'analyse chimique de la liqueur après désilicatation. Le tableau 9 informe sur le rendement de précipitation de la silice et de l'alumine.

**Tableau 6**

| Conditions opératoires des essais de désilicatation de la liqueur de lixiviation de la bauxite de Jiaokou calcinée à 1030°C | | | | | |
|---|---|---|---|---|---|
| Température Desilication | 98°C | | | | |
| Essai N° | | 1 | 2 | 3(*) | 4(*) |
| Na₂O ctq | g/l | 96,1 | 96,1 | 48,05 | 48,05 |
| Volume Lixiviat | ml | 150 | 150 | 75 | 75 |
| Densité Lixiviat | | 1,1 | 1,1 | 1,1 | 1,1 |
| Masse Lixiviat | g | 168,9 | 168,9 | 84,5 | 84,5 |
| Masse eau | g | 0 | 0 | 75 | 75 |
| Chaux | g | 2,053 | 2,053 | 1,027 | 1,027 |
| Eau du lait de chaux | g | 18,6 | 18,6 | 9,3 | 9,3 |
| Masse suspension entrée | g | 189,6 | 189,6 | 169,8 | 169,8 |
| (*) Les tests 3 et 4 ont été effectués avec un lixiviat dilué de moitié. | | | | | |

**Tableau 7**

| Analyse des liqueurs utilisées pour la désilicatation | | | | | |
|---|---|---|---|---|---|
| Essai N° | | 1 | 2 | 3 | 4 |
| Na₂O ctq | g/l | 93,23 | 93,23 | 46,62 | 46,62 |
| Al₂O₃ | g/l | 7,66 | 7,66 | 3,83 | 3,83 |
| Na₂O cbté | g/l | 1,52 | 1,52 | 0,76 | 0,76 |
| Na₂O cbté | % | 1,60 | 1,60 | 1,60 | 1,60 |
| SiO₂ | g/l | 7,81 | 7,81 | 3,91 | 3,91 |
| CaO | g/l | 0,005 | 0,005 | 0,003 | 0,003 |
| Fe₂O₃ | g/l | 0,005 | 0,005 | 0,003 | 0,003 |
| V₂O₅ | g/l | 0,08 | 0,080 | 0,04 | 0,04 |
| Na₂O total | g | 14,21 | 14,21 | 7,11 | 7,11 |
| Al₂O₃ dans la liqueur | g | 1,15 | 1,15 | 0,57 | 0,57 |
| SiO₂ dans liqueur | g | 1,17 | 1,17 | 0,59 | 0,59 |

**Tableau 8**

| Analyse des liqueurs après désilicatation | | | | | |
|---|---|---|---|---|---|
| Essai | N° | 1 | 2 | 3 | 4 |
| Masse de liqueur calculée | g | 186,29 | 186,18 | 168,38 | 168,18 |
| Densité | | 1,104 | 1,118 | 1,062 | 1,061 |
| Volume de liqueur | ml | 168,80 | 166,51 | 158,56 | 158,55 |
| Na₂O ctq | g/l | 91,70 | 95,25 | 48,04 | 47,90 |
| Al₂O₃ | g/l | 0,00 | 0,13 | 0,51 | 0,19 |
| Na₂O cbté | g/l | 2,70 | 2,86 | 1,83 | 1,59 |
| Na₂O cbté | % | 2,86 | 2,92 | 3,67 | 3,21 |
| SiO₂ | g/l | 0,64 | 0,82 | 0,94 | 0,56 |
| CaO | g/l | 0,018 | 0,018 | 0,014 | 0,015 |
| Fe₂O₃ | g/l | 0,00 | 0,00 | 0,00 | 0,00 |
| V₂O₅ | g/l | 0,07 | 0,07 | 0,06 | 0,06 |
| Rp liq | | 0,000 | 0,001 | 0,011 | 0,004 |

**Tableau 9**

| Rendements de précipitation de la silice et de l'alumine | | |
|---|---|---|
| Précipitation avec lait de chaux | Taux de précipitation [%] | |
| | SiO₂ | Al₂O₃ |
| Lixiviat à 96 g/L Na₂O | 90 | 99 |
| Lixiviat a 48 g/L Na₂O | 80 | 90 |

On observe que la diminution de moitié de la concentration du lixiviat fait chuter le taux de précipitation de la silice de 10%. On note également que le lait de chaux n'affecte quasiment pas la teneur de la solution en CaO.

Le tableau 10 ci-dessous présente l'analyse du silicate précipité (boue blanche).

**Tableau 10**

| Analyse du silicate précipité | | | | | |
|---|---|---|---|---|---|
| Essai | N° | 1 | 2 | 3 | 4 |
| Masse de boues pesée | g | 3,28 | 3,39 | 1,41 | 1,61 |
| Perte au feu | % | 18,90 | 18,90 | 19,90 | 19,90 |
| Al₂O₃ | % | 2,5 | 2,5 | 2,1 | 2,1 |
| SiO₂ | % | 31,96 | 31,96 | 30,16 | 30,16 |
| Fe₂O₃ | % | 0,4 | 0,4 | 0,3 | 0,3 |
| TiO₂ | % | 0,05 | 0,05 | 0,04 | 0,04 |
| Na₂O | % | 0,05 | 0,05 | 0,05 | 0,05 |
| CaO | % | 44,28 | 44,28 | 43,95 | 43,95 |
| Total | % | 98,14 | 98,14 | 96,50 | 96,50 |
| CaO/SiO₂ | % | 1,39 | 1,39 | 1,46 | 1,46 |
| Na₂O/SiO₂ | % | 0,002 | 0,002 | 0,002 | 0,002 |
| CaO introduite calculée | % | 55,10 | 55,10 | 72,39 | 72,39 |
| Al₂O₃ dans la boue | g | 0,08 | 0,08 | 0,03 | 0,03 |
| Na₂O dans les boues | g | 0,002 | 0,002 | 0,001 | 0,001 |
| SiO₂ dans la boue | g | 1,048 | 1,083 | 0,425 | 0,486 |

Le diffractogramme des rayons X montre que a phase silicatée précipitée obtenue est la tobermorite [Ca₅Si₆O₁₆(OH)₂ × 4 H₂O] (PM=702). On trouve également de la portlandite excédentaire et la calcite.

Le taux de précipitation est situé entre 87 et 90%, pour la précipitation avec du lait de chaux, et 74% quand on utilise de la chaux solide. L'insolubilisation de la soude est estimée à 0.0017 points par point de silice dissoute.

### Exemple 3 : Bauxite de Xiao Yi

On a approvisionné une poudre de bauxite de Xiao Yi (Shanxi, Chine) dont l'analyse chimique est détaillée dans le tableau 11 ci-dessous.

**Tableau 11**

| Composition de la bauxite de Xiao Yi | | | | | | | | | |
|---|---|---|---|---|---|---|---|---|---|
| Al₂O₃ | SiO₂ | Fe₂O₃ | TiO₂ | MgO | CaO | K₂O | CO₂ total | S total | F |
| 51,59 | 19,27 | 8,24 | 2,67 | 0,15 | 0,33 | 0,38 | 0,5 | 0,05 | 0,1 |

Ce minerai brut présente une composition sensiblement différente de celle de la bauxite de Jiaokou. En particulier, sa teneur en aluminium est plus faible, et sa teneur en silicium est plus forte : le rapport A/S est très faible, d'environ 2,7 ; la silice est principalement présente sous la forme de kaolinite. C'est une bauxite qualifiée comme « low grade » que l'on évite d'introduire dans les procédés selon l'état de la technique. De ce fait elle constitue un excellent défi pour le procédé selon l'invention.

### • Calcination et lixivation : conditions opératoires

On a placé des échantillons de minerai de 30 g dans des creusets en silice ; ces derniers ont été introduits dans un four moufle à 1 020 °C dans un four à moufle avec un temps de séjour de 30 min. Après calcination on a sorti les échantillons du four et les laissés refroidir à l'air ambiant ; ils ont ensuite été pesés.

On a ensuite lixivié la bauxite calcinée à 100 °C pendant 45 min dans une solution à 100 g/L de Na₂O (correspondant à 130 g/L de NaOH), avec une concentration en solide de 80 g/L. Cette lixiviation a été effectuée dans un réacteur à double enveloppe chauffé avec un bain à huile thermostaté.

Après lixiviation la suspension a été filtrée sur un filtre papier à filtration lente (réf. Whatman 589/3) dans un entonnoir Büchner monté sur une fiole reliée à une pompe à vide. Une première filtration a été effectuée à chaud, puis deux autres filtrations ont été réalisées après repulpage du gâteau avec de l'eau déminéralisée à température ambiante. Le gâteau de la deuxième filtration a été lavé sur filtre avec de l'éthanol.

Le minerai brut, la bauxite calcinée et le résidu de lixiviation ont été caractérisés par analyses chimiques, diffraction des rayons-X (DRX), spectroscopie infrarouge (DRIFTS) et microscopie électronique à balayage (MEB). En outre, pour la bauxite de Xiao Yi (Shanxi), une analyse thermogravimétrique (ATG) couplée à l'analyse thermique différentielle (ATD) a été réalisée sur le minerai brut.

### • Résultats après la calcination (« Roasting ») et la lixiviation (« Leaching »)

La caractérisation par diffraction des rayons X a montré que les phases cristallisées de la bauxite de départ sont par ordre d'importance décroissante : le diaspore (AIO(OH)), la kaolinite (Al₂Si₂O₅(OH)₄), la magnétite (Fe₃O₄), l'anatase (TiO₂), le rutile (TiO₂), l'hématite (Fe₂O₃), la goethite (FeO(OH)), le quartz (SiO₂), un mica (illite, muscovite (Al₂O₃AlO₁₀(OH)₂K), la calcite (CaCO₃), la palygorskite (MgAl)₄Si₃O₂₃(OH)₂-8H₂O. Dans ce minerai la forte teneur en silice provient donc essentiellement de la kaolinite et accessoirement du quartz et autres phyllosilicates (micas, palygorskite).

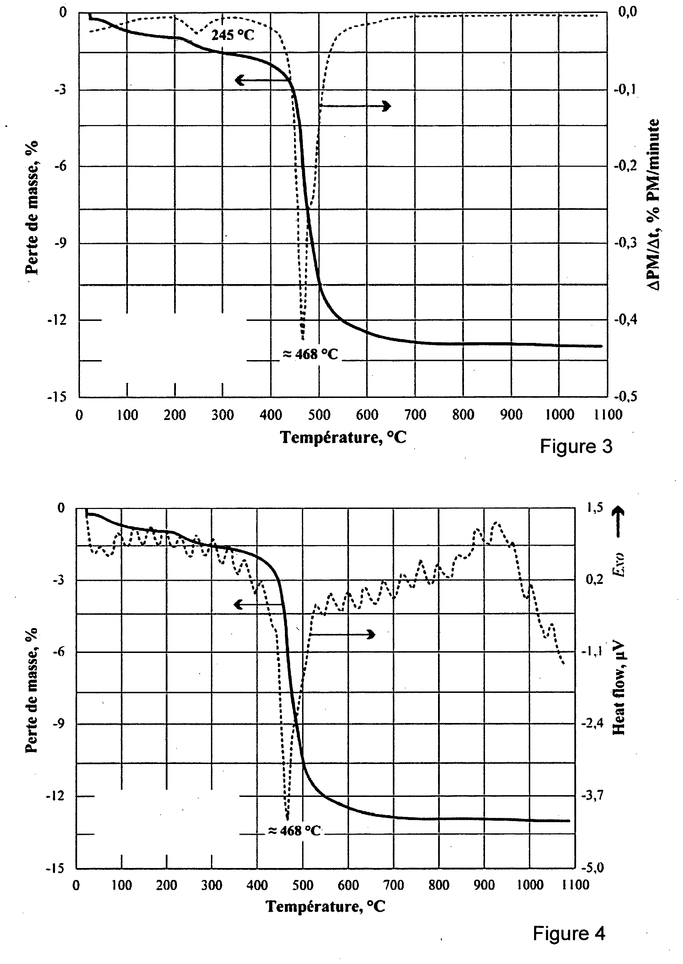

L'analyse thermogravimétrique (ATG) couplée à l'analyse thermique différentielle (ATD) montre essentiellement la déshydroxylation de la diaspore et de la kaolinite (voir les figures 3 et 4). Aux alentours de 900°C on a observé un aspect de la courbe qui suggère l'hypothèse de la cristallisation d'un composé néoformé qui pourrait être la mullite. Ces résultats ont amenés les inventeurs à fixer la température de calcination à 1020 °C.

Après calcination de la bauxite de Xiao Yi à cette température de 1020 °C, la caractérisation par DRX n'a révélé plus que la présence du corindon (α-Al₂O₃), de la magnétite, de l'hématite, de l'anatase, du rutile et du quartz. Par spectroscopie IR on constate que tous les signaux relatifs à la kaolinite avaient disparu et par voie de conséquence, la structure tétraédrique planétaire aussi : il n'en restait qu'un signal très distribué correspondant à de la silice amorphe.

La perte de masse au cours de la calcination à 1 020 °C de la bauxite de Xiao Yi, mesurée avec une très bonne reproductivité sur plusieurs essais, était de 14,02 %, comme cela est montré sur le tableau 12 ci-dessous.

**Tableau 12**

| Perte de masse par calcination à 1 020 °C | | | | | | | | | |
|---|---|---|---|---|---|---|---|---|---|
| Creuset N° | 1 | 2 | 3 | 4 | 5 | 6 | 7 | 8 | Total |
| Masse Bauxite [g] | 30,83 | 31,07 | 31,58 | 30,09 | 30,1 | 32,98 | 29,17 | 30,64 | 246,47 |
| Masse calcinée [g] | 26,5 | 6,71 | 27,12 | 25,9 | 25,89 | 28,33 | 25,14 | 26,37 | 211,92 |
| Perte massique [%] | 14,05 | 14,03 | 14,11 | 13,93 | 13,99 | 14,09 | 13,96 | 13,95 | 14,02 |

Des tests de lixiviation du minerai calciné dans une solution sodique ont été réalisés dans les conditions opératoires définies en début de ce paragraphe. Au cours de cette manipulation, les taux de dissolution massiques observés sont compris entre 16,8 % et 17,8%. Les résultats sont rassemblés dans le tableau 13 ci-dessous.

**Tableau 13**

| Taux de dissolution massique des essais de lixiviation de la bauxite de Xiao Yi | | | | | | |
|---|---|---|---|---|---|---|
| Essai N° | 1 | 2 | 3 | 4 | 5 | Total |
| Masse bauxite calcinée [g] | 32 | | | | 24 | 152 |
| Masse gâteau filtration [g] | 26,6 | 26,5 | 26,4 | 26,3 | 19,8 | 125,6 |
| Taux de dissolution massique [%] | 16,8 | 17,2 | 17,5 | 17,8 | 17,5 | 17,36 |

Le taux de desilicatation est de 74,2 %.

La caractérisation minéralogique par DRX de la bauxite après lixiviation met en évidence la présence des mêmes phases cristallisées qu'avant lixiviation à savoir : le corindon (α-Al₂O₃), la magnétite, l'hématite, l'anatase, le rutile et le quartz. Toutefois, le spectre IR indique que le produit est devenu globalement très hydrophile, ce qui est favorable à sa mise en suspension, et que les signaux relatifs aux élongations Si-O ont considérablement diminué d'intensité, ce qui est conforme avec une dissolution des phases silicatées.

Le tableau 14 ci-dessous compare les analyses chimiques de la bauxite d'origine, après calcination et après lixiviation :

**Tableau 14**

| Analyse chimique de la bauxite brute, calcinée et calcinée-lixiviée (« pré-traitée ») | | | | | | | | | | | | | |
|---|---|---|---|---|---|---|---|---|---|---|---|---|---|
| | Al₂O₃ [%] | SiO₂ [%] | Fe₂O₃ [%] | TiO₂ [%] | MgO [%] | CaO [%] | K₂O [%] | Na₂O [%] | CO₂ total [%] | S total [%] | F [%] | PAF [%] | A/S |
| Bauxite | | | | | | | | | | | | | |
| brute | 51,59 | 19,27 | 8,24 | 2,67 | 0,15 | 0,33 | 0,38 | 0,03 | 0,5 | 0,05 | 0,1 | 13,69 | 2,7 |
| calcinée | 59,46 | 22,66 | 9,97 | 3,1 | 0,17 | 0,38 | 0,45 | 0,04 | 0,02 | 0,05 | 0,06 | 0,33 | 2,6 |
| Lixiviée | 71,51 | 7,08 | 11,55 | 3,74 | 0,2 | 0,48 | 0,08 | 1,85 | 0,33 | 0,03 | 0,07 | 2,16 | 10,1 |
| « PAF » désigne la perte (massique) au feu, « A/S » désigne le rapport massique alumine sur silice. | | | | | | | | | | | | | |

On constate clairement la transformation du minerai après traitement : la teneur en alumine passe de 51,59 % à 71,51 % et le rapport alumine/silice passe de 2,7 à 10,1. Cela montre que le procédé selon l'invention est capable de transformer une bauxite « low grade » en bauxite de bonne qualité.

### • Attaque (digestion) de la bauxite de Xiao Yi réalisée dans des conditions opératoires industrielles

La bauxite lixiviée a été broyée (tout passant à 300 µm) et séchée à l'étuve à 110 °C. L'attaque a été réalisée dans un autoclave de 150 ml porté à 260 °C pendant 40 min. La composition chimique de la liqueur d'attaque était très proche de celle des liqueurs industrielles chinoises principalement : Na₂O ctq = 238 g/L, RP = 0,540 et Na₂O cbté = 17,2 g/L.

La chaux ajoutée à l'attaque provenait d'une usine d'alumine chinoise ; elle contient 86,02% de CaO. La chaux était éteinte et a été ajoutée sous forme de lait. Différentes quantités de chaux ont été essayées.

A la fin de l'attaque, la suspension a été filtrée. Le solide a été lavé et préparé pour des analyses chimiques et cristallographiques (perte au feu, fluorescence X et diffraction des rayons X). La liqueur a été est analysée au Methrom (Na₂O, Al₂O₃, carbonate).

Les principaux résultats sont reportés dans le tableau 15 ci-dessous.

**Tableau 15**

| Résultats des essais d'attaque de la bauxite de Xiao Yi sur minerai brut et minerai traité par le procédé selon l'invention (Calcination et lixiviation) | | | | | | |
|---|---|---|---|---|---|---|
| | Bauxite brute | | Bauxite calcinée et lixiviée (invention) | | | |
| N° essai | 351-7 | 351-8 | 360-1 | 360-2 | 360-3 | 360-4 |

| Analyse bauxite | | | | | | |
|---|---|---|---|---|---|---|
| Perte au feu [%] | 13,4 | 13,4 | 1,3 | 1,3 | 1,3 | 1,3 |
| Al₂O₃ [%] | 53,7 | 53,7 | 71,5 | 71,5 | 71,5 | 71,5 |
| SiO₂ [%] | 19 | 19 | 6,92 | 6,92 | 6,92 | 6,92 |
| Fe₂O₃ [%] | 8,8 | 8,8 | 12,2 | 12,2 | 12,2 | 12,2 |
| Na₂O [%] | 0,05 | 0,05 | 1,44 | 1,44 | 1,44 | 1,44 |
| A/S | 2,8 | 2,8 | 10,3 | 10,3 | 10,3 | 10,3 |

| Conditions d'attaque | | | | | | |
|---|---|---|---|---|---|---|
| Température [°C] | 260 | 260 | 260 | 260 | 260 | 260 |
| Durée [min] | 40 | 40 | 40 | 40 | 40 | 40 |
| CaO ajouté (calculé)[%] | 9,2 | 9,1 | 5,7 | 7,9 | 5,9 | 7,5 |
| RP liqueur d'attaque | 0,54 | 0,54 | 0,54 | 0,54 | 0,54 | 0,54 |
| Na₂O ctq [g/L] | 238 | 238 | 238 | 238 | 238 | 238 |
| Na₂O cbté [% total] | 6,7 | 6,7 | 6,7 | 6,7 | 6,7 | 6,7 |
| RP visé | 1,2 | 1,2 | 1,11 | 1,11 | 1,212 | 1,212 |
| RP calculé sur solide | 1,19 | 1,184 | 1,061 | 1,085 | 1,106 | 1,164 |

| Analyse des boues | | | | | | |
|---|---|---|---|---|---|---|
| Perte au feu [%] | 10,2 | 10,1 | 7,2 | 8,2 | 6,4 | 8 |
| Al₂O₃ [%] | 24,8 | 25,2 | 25,3 | 20,1 | 32 | 23,2 |
| SiO₂ [%] | 23,5 | 23,4 | 13,74 | 14,2 | 12,57 | 13,35 |
| Fe₂O₃ [%] | 10,5 | 10,7 | 24,3 | 25 | 22,3 | 25,1 |
| Na₂O [%] | 13,5 | 13,4 | 8,33 | 7,71 | 7,57 | 7,28 |

| Rendement d'attaque | | | | | | |
|---|---|---|---|---|---|---|
| sur Al₂O₃ - SiO₂ [%] | 96,6 | 95,8 | 91,06 | 95,56 | 83,63 | 92,47 |
| sur Al₂O₃ totale [%] | 61,6 | 61,5 | 82,32 | 86,34 | 75,65 | 83,98 |
| L'abréviation RP signifie : « rapport pondéral ». | | | | | | |

Certains résultats analytiques présentent de faibles différences avec le tableau ci-dessus. Cela résulte de mesures faites par des laboratoires différents afin de confirmer la validité du procédé.

On constate essentiellement que l'alumine contenu dans la bauxite calcinée à 1 020°C puis lixiviée en milieu sodique est soluble dans les conditions opératoires des usines chinoises à haute température avec des rendements d'extraction tout à fait acceptables qui confirment l'intérêt du procédé selon l'invention. Ce résultat montre clairement que le corindon est soluble en milieu sodique à haute température selon son degré de cristallisation et sa distribution granulométrique.

La dispersion constatée est sans doute en partie liée à la différence de quantité de chaux ajoutée à l'attaque. Ce paramètre important a une influence sur le rendement, les courbes de rendement en fonction du rapport pondéral alumine / soude caustique, et la quantité de soude insoluble.

Ces résultats ont permis d'estime les consommations spécifiques du procédé selon l'invention pour cette bauxite.

**Tableau 16**

| Consommations spécifiques d'un procédé Bayer selon l'état de la technique et d'un procédé Bayer selon l'invention mettant en œuvre la technologie de calcination - lixiviation | | | |
|---|---|---|---|
| Matière | Unité | Selon l'état de la technique | Selon l'invention |
| Matières premières et énergie | | | |
| Bauxite | Tonne par tonne Al₂O₃ produite | 3,46 | 2,61 |
| Total CaO | Tonne par tonne Al₂O₃ produite | 0,361 | 0,81 |
| Total NaOH | Tonne par tonne Al₂O₃ produite | 0,49 | 0,148 |
| Total énergie | GJ par tonne Al₂O₃ produite | 11 | 11,4 |

| Produits secondaires | | | |
|---|---|---|---|
| Boues rouges | Tonne par tonne Al₂O₃ produite | 3,04 | 1,063 |
| Bouge blanche | Tonne par tonne Al₂O₃ produite | 0 | 1,24 |
| Total boues | Tonne par tonne Al₂O₃ produite | 3,04 | 2,303 |

Cet exemple montre plusieurs avantages de l'invention. On voit que le procédé selon l'invention conduit à une meilleure utilisation des bauxites à faible teneur en aluminium et haute teneur en silicium. On observe également une réduction très significative de la quantité de résidus de type boues rouges et une réduction importante de la quantité globale de résidus. (On note que la précipitation des silicates, absente dans le procédé Bayer selon l'état de la technique, génère son propre résidu, de couleur blanche, mais dans le procédé selon l'invention la somme des deux résidus est significativement inférieure aux boues rouges selon l'état de la technique). Sachant que les résidus représentent un facteur de coût, cet aspect environnemental représente lié aux résidus du procédé représente un avantage très attractif pour les opérateurs ; la valeur financière de cet avantage est difficile à évaluer de manière globale car elle dépend de nombreux facteurs liés à l'usine.

### Exemple 4 : Essais de digestion de la bauxite de Xiao Yi, prétraitée par le procédé de calcination - lixiviation selon l'invention, à faible concentration de soude

Sur la base des excellents résultats de l'exemple 3, les inventeurs ont cherché à améliorer encore leur procédé. Compte-tenu que le procédé de prétraitement de la bauxite (procédé Roast-Leach) diminue fortement la masse de bauxite à l'entrée du procédé Bayer et donc des boues rouges à la sortie (à masse d'alumine produite constante) on peut penser que le lavage des boues sera plus efficace dans le cadre du procédé selon l'invention. Si l'on garde une efficacité de lavage identique on peut donc baisser la quantité d'eau nette de lavage des boues, ce qui permet de diminuer la quantité totale d'eau à évaporer dans le cadre du procédé Bayer. Ainsi on diminue fortement la consommation énergétique à ce stade du procédé. En effet, dans le procédé Bayer, la réduction de l'évaporation s'accompagne obligatoirement d'une diminution de la concentration en soude caustique de la liqueur utilisée pour la digestion. Les inventeurs ont donc effectué des essais de digestion sur la bauxite de Xiao Yi lixiviée à une concentration en Na₂O ctq de 171,5 g/L ce qui représente une diminution conséquente par rapports aux premiers essais (Exemple 3) réalisés avec une concentration de 238 g/L. La concentration de 171,5 g/L de Na₂O ctq correspond à une unité Bayer (appelée dans le métier une « raffinerie ») qui fonctionnerait sans évaporateurs.

Dans le présent exemple 4 la bauxite de Xiao Yi utilisée dans l'exemple 3 a été traitée par le même procédé que celui décrit dans l'exemple 3, mais sa digestion dans le procédé Bayer a été effectuée à concentration de soude réduite : on a abaissé la concentration en Na₂O ctq de 238 g/L à 171,5 g/L. Les résultats sont rassemblés dans le tableau 17 ci-dessous.

**Tableau 17**

| Résultats de la digestion à faible concentration en soude de la bauxite de Xiao Yi lixiviée | | | | |
|---|---|---|---|---|
| | Bauxite brute | | Bauxite calcinée et lixiviée (invention) | |
| N° essai | 351-7 | 351-8 | LOMB3 | LOMB4 |

| Analyse bauxite | | | | |
|---|---|---|---|---|
| Perte au feu [%] | 13,4 | 13,4 | 1,30 | 1,30 |
| Al₂O₃ [%] | 53,7 | 53,7 | 71,50 | 71,50 |
| SiO₂ [%] | 19 | 19 | 6,92 | 6,92 |
| Fe₂O₃ [%] | 8,8 | 8,8 | 12,20 | 12,20 |
| Na₂O [%] | 0,05 | 0,05 | 1,44 | 1,44 |
| A/S | 2,8 | 2,8 | 10,3 | 10,3 |

| Conditions d'attaque | | | | |
|---|---|---|---|---|
| Température [°C] | 260 | 260 | 260 | 260 |
| Durée [min] | 40 | 40 | 40 | 40 |
| CaO ajouté (calculé)[%] | 9,2 | 9,1 | 8 | 10,4 |
| RP liqueur d'attaque | 0,54 | 0,54 | 0,54 | 0,54 |
| Na₂O ctq [g/L] | 238 | 238 | 171,5 | 171,5 |
| Na₂O cbté % total] | 6,7 | 6,7 | 7 | 7 |
| RP visé | 1,2 | 1,2 | 1,118 | 1,116 |

| Analyse des boues | | | | |
|---|---|---|---|---|
| Perte au feu [%] | 10,2 | 10,1 | 8,1 | 9,3 |
| Al₂O₃ [%] | 24,8 | 25,2 | 16,6 | 16,5 |
| SiO₂ [%] | 23,5 | 23,4 | 13,3 | 12,7 |
| Fe₂O₃ [%] | 10,5 | 10,7 | 22,4 | 20,5 |
| Na₂O [%] | 13,5 | 13,4 | 7,43 | 6,68 |

| Rendement d'attaque | | | | |
|---|---|---|---|---|
| sur Al₂O₃ - SiO₂ [%] | 96,6 | 95,8 | 97,2 | 96,6 |
| sur Al₂O₃ totale [%] | 61,6 | 61,5 | 87,5 | 86,5 |

On note que le rendement de solubilisation de l'alumine reste très élevé malgré une baisse considérable de la concentration en soude caustique de la liqueur d'attaque.

Ce résultat intéressant permettra de diminuer fortement la consommation énergétique et les coûts opératoires des raffineries d'alumine qui utiliseront la technologie selon l'invention.

### Exemple 5 : Bauxite de Wanji (Henan)

On a approvisionné de la bauxite de Wanji (province du Henan).

Les essais de calcination et de lixiviation ainsi que les analyses physico-chimiques ont été réalisés dans les mêmes conditions que pour la bauxite de Xiao Yi (exemple 3). La différence essentielle entre les deux minerais provient de la forme de la silice dans la bauxite. Pour le minerai de Wanji la caractérisation par diffraction X indique les phases cristallisées suivantes :
Le diaspore (AIO(OH)), la muscovite ((K₁₋ₓ, Naₓ) (Al_{2-y}Fe_{y}) (AlSi₃) (O₁₀(OH)₂), la kaolinite (Al₂Si₂O₅(OH)₄), le quartz (SiO₂), la sidérite (FeCO₃), la goethite (FeO(OH)), l'hématite (Fe₂O₃), la magnétite (Fe₃O₄), l'anatase et le rutile (TiO₂).

La teneur en SiO₂ provient donc essentiellement de la muscovite et du quartz, accessoirement de la kaolinite.

Les analyses de la bauxite brute, calcinée (1020°C) et lixiviée sont reportés dans le tableau 18 ci-après :

**Tableau 18**

| Analyses chimiques de la bauxite de Wanji avant et après traitement | | | | | | | | | | | | | | |
|---|---|---|---|---|---|---|---|---|---|---|---|---|---|---|
| Eléments | **Al₂O₃** | **SiO₂** | Fe₂O₃ | TiO₂ | MgO | CaO | K₂O | Na₂O | CO₂ total | S total | F | Li | P.A.F. | **A/S** |
| | **%** | **%** | **%** | **%** | **%** | **%** | **%** | **%** | **%** | **%** | **%** | **ppm** | **%** | |
| Bauxite brute | **50,92** | **12,58** | 17,62 | 2,83 | 0,42 | 0,23 | 2,39 | 0,031 | 4,08 | 0,69 | 0,17 | 184 | 13,11 | **4,0** |
| Bauxite calcinée | **59,51** | **14,29** | 20,33 | 3,26 | 0,48 | 0,26 | 2,74 | 0,037 | <0,01 | 0,08 | 0,07 | 202 | 0,2 | **4,2** |
| Bauxite "lixiviée" | **62,35** | **8,58** | 21,55 | 3,6 | 0,53 | 0,26 | 2,56 | 0,033 | <0,01 | 0,03 | 0,07 | 100 | 0,39 | **7,3** |

Après calcination, la caractérisation par diffraction des rayons X met en évidence la disparition de la kaolinite, la transformation du diaspore en corindon (α-Al₂O₃), de la sidérite et de la goethite en hématite. Les autres phases, muscovite (structure résiduaire), quartz, magnétite, anatase et rutile sont toujours présentes. La limite de détection de cette caractérisation par rayons X est inférieure à 1 % massique.

La lixiviation en milieu sodique permet d'abaisser la teneur en SiO₂ de 12,58 à 8,58% soit une diminution de 4 points, et un passage du rapport alumine/silice de 4,0 à 7,3 (cf. tableau Z2 ci-dessus).

La différence observée avec le minerai de Xiao Yi (diminution de 12 points de la teneur en silice) vient du fait que dans ce dernier minerai la teneur en SiO₂ provient essentiellement de la kaolinite alors que dans la bauxite de Wanji elle vient de la muscovite qui est donc difficilement lixiviable même après calcination.

Néanmoins les tests de digestion réalisés montrent une réduction de 60 % de la consommation de soude et de 25% de la consommation de bauxite par tonne d'alumine.

### Exemple 6 : Bauxite du Shanxi

On a approvisionné une autre bauxite du Shanxi (Chine). Elle présente un rapport alumine/silice de 1,94. L'analyse par diffraction des rayons X indique qu'il s'agit d'une bauxite diasporique dont les silicates sont constitués essentiellement de kaolinite, d'une faible proportion de muscovite, et de quartz. Le fer est présent essentiellement sous la forme de goethite.

Cette bauxite a été calcinée pendant 30 minutes à 1030 °C. La lixiviation de cette bauxite calcinée a été effectuée à 100 °C avec de la soude à 100 g Na₂OI / litre durant 45 minutes.

Les analyses de la bauxite brute, calcinée (1030°C) et lixiviée sont reportés dans le tableau 19 ci-après :

**Tableau 19**

| Analyses chimiques de la bauxite de Shanxi avant et après traitement | | | | | | | | | | | | | | | |
|---|---|---|---|---|---|---|---|---|---|---|---|---|---|---|---|
| Eléments | Al₂O₃ | SiO₂ | Fe₂O₃ | TiO₂ | MgO | CaO | K₂O | Na₂O | Cr₂O₃ | MnO | P₂O₅ | V₂O₅ | ZrO₂ | P.A.F. | A/S |
| | % | % | % | % | % | % | % | % | % | % | % | % | % | % | |
| Bauxite brute | 53,80 | 27,75 | 2,20 | 2,52 | 0,24 | 0,35 | 0,46 | 0,06 | 0,03 | 0,01 | 0,15 | 0,05 | 0,07 | 13,80 | 1,94 |
| Bauxite calcinée | 61,50 | 31,30 | 2,50 | 2,92 | 0,22 | 0,44 | 0,49 | 0,07 | 0,04 | 0,01 | 0,18 | 0,06 | 0,08 | 0,10 | 1,96 |
| Bauxite lixiviée | 73,80 | 14,49 | 3,20 | 3,71 | 0,35 | 0,54 | 0,16 | 1,18 | 0,07 | 0,02 | 0,12 | 0,04 | 0,11 | 2,20 | 5,09 |

Après calcination, la caractérisation par diffraction des rayons X met en évidence la disparition de la kaolinite, et l'apparition d'une phase silicieuse, la mullite. On observe un bombement du diffractogramme dans une zone 2θ comprise entre 18° et 20°, traduisant la formation d'une phase de silice mal cristallisée. Le diaspore a disparu. Le corindon est présent. La goethite a été transformée en hématite.

Après lixiviation, la caractérisation par diffraction des rayons X montre que la mullite est encore présente. Le bombement du diffractogramme a disparu. La majeure partie de la silice amorphe est passée en solution. Les phases corindon, hématite, rutile et anatase sont toujours présentes.

La lixiviation du minerai calciné en milieu sodique permet d'abaisser la teneur en SiO₂ de 27,75 % à 14,49 % soit une augmentation du rapport alumine/silice de 1,94 à 5,06. Le rendement de désilicatation s'élève à 62 ,9 %. L'incorporation de soude est de 0,98 %.

## Revendications

1. Procédé de fabrication d'une bauxite prétraitée, dans lequel
- on approvisionne une bauxite broyée,
- on calcine (2010) ladite bauxite broyée pour obtenir une bauxite calcinée,
- on soumet ladite bauxite calcinée à un traitement de lixiviation (2030) avec une solution de lixiviation qui est une solution aqueuse de soude (2020), pour obtenir, après séparation de phase (2040) une bauxite prétraitée, appauvrie en silicium, et une solution de lixiviation, chargée en silice dissoute issue de la lixiviation,
ledit procédé étant **caractérisé en ce que** :
- on soumet ladite solution de lixiviation, chargée en silice dissoute lors de la lixiviation, à un traitement à la chaux (2052) pour précipiter des silicates (2050) et appauvrir ladite solution de lixiviation en silicium ;
- on procède à une séparation de phase (2060) par décantation pour séparer la solution de lixiviation appauvrie en silicium du précipité (2070),
- on lave ledit précipité (2070) à l'eau (2072).

2. Procédé selon la revendication 1, **caractérisé en ce que** ladite bauxite présente avant prétraitement un rapport de Al₂O₃ / SiO₂ compris entre 1 et 7, de préférence compris entre 1 et 5,5, encore plus préférentiellement compris entre 1 et 4, et le plus préférentiellement entre 1 et 3.

3. Procédé selon la revendication 1 ou 2, dans lequel ladite calcination et ladite lixiviation sont conduits de manière à obtenir une bauxite prétraitée présentant une perte au feu inférieure à 2,5 % massiques, de préférence inférieure à 2,0 %, et encore plus préférentiellement inférieure à 1,5 %.

4. Procédé selon l'une quelconque des revendications 1 à 3, dans lequel ladite calcination est effectuée à une température comprise entre 920 °C et 1120 °C, de préférence entre 950 °C et 1070 °C, et encore plus préférentiellement entre 1000 °C et 1050 °C.

5. Procédé selon l'une quelconque des revendications 1 à 4, dans lequel ladite solution de lixiviation (2020) présente une teneur en soude comprise entre 70 g NaOH/L et 160 g NaOH/L, de préférence entre 90 g NaOH/L et 150 g NaOH/L, et encore plus préférentiellement entre 110 g NaOH/L et 140 g NaOH/L.

6. Procédé selon la revendication 5, dans lequel la température de ladite solution de lixiviation est comprise entre 80 °C et 120 °C.

7. Procédé selon l'une quelconque des revendications 1 à 6, dans lequel ledit traitement à la chaux est effectué dans un bac réacteur sous agitation, avec une quantité de chaux telle que le rapport stoechiométrique CaO : SiO₂ soit compris entre 1,1 et 1,5

8. Procédé selon l'une quelconque des revendications 1 à 7, dans lequel la chaux est introduite sous forme de lait de chaux ou sous forme solide.

9. Précipité susceptible d'être obtenu par le procédé de fabrication d'une bauxite prétraitée selon l'une quelconque des revendications 1 à 8.

10. Précipité selon la revendication 9, **caractérisée en ce qu'**il comprend du silicate de calcium, notamment sous forme d'hydrate de silicate de calcium.

11. Précipité selon la revendication 10, **caractérisé en ce qu'**il comprend de la tobermorite, possiblement substituée par l'aluminium, le sodium et/ou le magnésium.

12. Installation pour la mise en oeuvre du procédé selon l'une quelconque des revendications 1 à 8, comprenant
- une unité de prétraitement de la bauxite par calcination et lixiviation, permettant de transformer une bauxite en bauxite prétraitée, ladite unité comprenant :
- au moins un four de calcination pour calciner la bauxite,
- au moins une unité de lixiviation pour lixivier la bauxite calcinée avec une solution aqueuse de soude, dite « solution de lixiviation » ;
- au moins une unité de séparation solide-liquide pour séparer la bauxite calcinée et lixiviée de ladite solution de lixiviation,
- un bac réacteur pour la précipitation de silicates de calcium à partir de ladite solution de lixiviation par ajout de chaux,
- un décanteur pour séparer le précipité de silicate de calcium de ladite solution de lixiviation,
- un filtre pour laver à l'eau ledit précipité.

13. Installation selon la revendication 12, dans laquelle l'eau de lavage dudit précipité est utilisée dans l'étape de lixiviation.

14. Installation selon la revendication 12 ou 13, comprenant par ailleurs une unité de fabrication d'alumine à partir de ladite bauxite prétraitée, ladite unité de fabrication d'alumine comprenant :
o au moins une enceinte pour traiter la bauxite prétraitée avec une solution aqueuse de soude, dite « liqueur Bayer », à une température d'au moins 100°C,
o au moins une unité de séparation solide - liquide pour séparer le résidu solide de ladite liqueur Bayer ;
o au moins une unité de cristallisation pour cristalliser du trihydrate d'aluminium à partir de ladite liqueur Bayer par ajout de germes de trihydrate d'aluminium ;
o au moins une unité de séparation solide - liquide pour séparer le trihydrate d'aluminium cristallisé de ladite liqueur Bayer ;
o optionnellement au moins une unité de calcination pour transformer ledit trihydrate d'aluminium en alumine.

15. Installation selon la revendication 14, dans laquelle l'eau de lavage dudit précipité est utilisée dans ladite liqueur Bayer.
